# EUROPEAN PATENT APPLICATION

(11) **EP 4 192 037 A1**
(43) Date of publication of application: **07.06.2023**
(21) Application number: 21857493.7
(22) Date of filing: 30.07.2021
(51) Int. Cl.: H04S 7/00, G06F 3/16

(54) **AUDIO CONTROL METHOD, DEVICE, AND SYSTEM**

(30) Priority: 21.08.2020 CN 202010851744
(71) Applicant: Huawei Technologies Co., Ltd., Shenzhen, Guangdong 518129 (CN)
(72) Inventor: LIU, Yujin, Shenzhen, Guangdong 518129 (CN)
(74) Representative: Gill Jennings & Every LLP
(86) International application number: PCT/CN2021/109920
(87) International publication number: WO 2022/037398

(57) **Abstract**

Embodiments of this application provide an audio control method, a device, and a system, and relate to the field of sound effect adjustment. A user scenario can be identified based on multi-dimensional scenario perception information obtained by a plurality of perception devices, and an audio output effect of an audio device in a plurality of dimensions can be adaptively adjusted based on the user scenario. Diversified scenario requirements of a user can be met, and manual adjustment operations of the user can be reduced. A solution is as follows: The perception device obtains scenario perception information and a scenario perception result; the perception device sends first information to a decision control device, where the first information indicates the scenario perception result; the decision control device identifies a user scenario based on the scenario perception result; the decision control device sends second information to an audio device, where the second information indicates the user scenario; and the audio device adjusts an audio output effect based on the user scenario, where the audio output effect includes one or more of noise control, equalizer adjustment, or volume adjustment. Embodiments of this application are used for audio output control.

## Description

This application claims priority to Chinese Patent Application No. 202010851744.X, filed with the China National Intellectual Property Administration on August 21, 2020, and entitled "AUDIO CONTROL METHOD, DEVICE, AND SYSTEM", which is incorporated herein by reference in its entirety.

### TECHNICAL FIELD

Embodiments of this application relate to the field of user scenario perception and adaptive sound effect adjustment of a smart terminal, and in particular, to an audio control method, a device, and a system.

### BACKGROUND

With development of electronic technologies, there are more types of audio devices used for audio playing, for example, a Bluetooth headset, a wired headset, or a smart helmet. Currently, a user may adjust an audio output effect of an audio device by adjusting a button on the audio device, and an adjustment range of the audio output effect is small. This cannot meet requirements of the user in diversified scenarios.

### SUMMARY

Embodiments of this application provide an audio control method, a device, and a system, so that a user scenario can be accurately identified based on multi-dimensional scenario perception information obtained by a plurality of perception devices, to adaptively adjust an audio output effect of an audio device in a plurality of dimensions based on the user scenario. In this way, the audio output effect better meets the current actual user scenario, meets requirements of a user for diversified scenarios, and reduces manual adjustment operations of the user.

The following technical solutions are used in embodiments of this application.

According to one aspect, an embodiment of this application provides an audio control method, applied to an audio system. The audio system includes a plurality of perception devices, a decision control device, and an audio device that are connected for communication. The method includes: The perception device obtains scenario perception information, and obtains a scenario perception result based on the scenario perception information. The perception device sends first information to the decision control device, where the first information indicates the scenario perception result. After receiving first information from the plurality of perception devices, the decision control device identifies a user scenario based on scenario perception results indicated by the first information. The decision control device sends second information to the audio device, where the second information indicates the user scenario. After receiving the second information from the decision control device, the audio device adjusts an audio output effect based on the user scenario indicated by the second information. The audio output effect includes one or more of noise control, equalizer (equalizer, EQ) adjustment, or volume adjustment.

The perception device in the audio system may be an electronic device having a scenario perception capability, the audio device may be an electronic device having a sound output function, the decision control device may be an electronic device having a strong computing capability, and the display device may be an electronic device having a display function.

For example, the plurality of perception devices may be mobile phones, watches, and/or headsets. The audio device may be a headset. The decision control device may be a mobile phone. The display device may be a mobile phone or a watch. It may be understood that there may alternatively be one perception device. For example, the perception device may be a mobile phone, a watch, or a headset.

The mobile phone may be a decision control device, a perception device, or a display device. The watch may be a perception device, or may be a display device. The headset may be an audio device, or may be a perception device.

In this solution, the plurality of perception devices in the audio system may obtain rich user scenario perception information from a plurality of angles, and obtain corresponding scenario perception results. The decision control device may accurately identify, based on a perception capability of the plurality of perception devices and with reference to a multi-dimensional scenario perception result, a user scenario obtained through fine division. The audio device may accurately control the audio output effect from a plurality of dimensions and a plurality of aspects based on the user scenario identified by the decision control device, so that the audio output effect can better match a user requirement in the current user scenario. This meets diversified scenario requirements of a user, and reduces manual adjustment operations of the user.

In a possible design, noise control includes a noise reduction frequency band and a noise reduction level, and/or a transparent transmission frequency band and a transparent transmission level. The noise reduction frequency band may refer to a frequency range for noise reduction, and the noise reduction level may refer to a noise reduction level and degree. The transparent transmission frequency band refers to a frequency range for sound transparent transmission, and the transparent transmission level refers to a sound transparent transmission level and degree.

In this way, for noise control of audio output, the audio device may perform fine-grained control at a finer granularity level, so that an audio output effect better matches a current user scenario, instead of only performing noise reduction on an entire frequency band of the audio.

In a possible design, the audio output effect further includes audio prompt information.

In other words, the audio device may provide a related prompt to the user by adjusting audio playing content.

In another possible design, scenario perception information includes one or more of image information, sound information, or motion status information.

In other words, the perception device may obtain rich user scenario perception information from a plurality of dimensions and a plurality of angles such as the image information, the sound information, and the motion status information, to obtain scenario perception results in a plurality of dimensions, so that the decision control device can more accurately determine the user scenario based on the multi-dimensional perception capabilities of the plurality of perception devices.

In another possible design, scenario perception information further includes one or more of the following: location information, ambient light information, cellular communication information, application information, or heart rate information.

In this way, the perception device may obtain rich user scenario perception information from more dimensions and more perspectives, to obtain scenario perception results in a plurality of dimensions, so that the decision control device can more accurately determine the user scenario based on the multi-dimensional perception capabilities of the plurality of perception devices.

In another possible design, that the audio device adjusts an audio output effect based on the user scenario indicated by the second information includes: The audio device adjusts the audio output effect based on the user scenario indicated by the second information and a correspondence between a user scenario and audio output effect information. The correspondence is preset on the audio device or from the decision control device.

In other words, the audio device may adjust the audio output effect in real time based on the current user scenario and the set correspondence between a user scenario and audio output effect information, so that the current audio output effect matches the real-time user scenario.

In another possible design, the audio system further includes a display device, and the method further includes: The decision control device sends third information to the display device, where the third information indicates the user scenario. After receiving the third information, the display device displays the user scenario and/or the audio output effect information corresponding to the user scenario indicated by the third information.

In this solution, the display device may present the current user scenario and/or the audio output effect corresponding to the current user scenario to the user in real time.

In another possible design, the method further includes: The display device configures or modifies the correspondence between a user scenario and audio output effect information in response to a first preset operation of the user for a display interface. The display device sends a configured or modified correspondence to the decision control device.

In this solution, the user may perform an interaction operation on the display interface of the display device, to configure or modify the correspondence between a user scenario and audio output effect information.

In another possible design, the method further includes: The display device sets a correspondence between a user scenario and a perception device in response to a second preset operation of the user for the display interface. The display device sends the set correspondence between a user scenario and a perception device to the decision control device.

In this solution, the user may perform an interaction operation on the display interface of the display device, to set the correspondence between a user scenario and a perception device.

In another possible design, the method further includes: A first electronic device enters a target mode after detecting a third preset operation of the user. The first electronic device negotiates a perception device, a decision control device, an audio device, and a display device in the audio system with another electronic device that is connected for communication. The first electronic device is a perception device or an audio device. The perception device, the decision control device, the audio device, and the display device that are determined through negotiation all enter a target mode.

In other words, role devices in the audio system may be determined through negotiation.

In another possible design, the method further includes: The decision control device is switched from one electronic device in the audio system to another electronic device in the audio system.

In other words, the decision control device used to determine the user scenario in the audio system may not be fixed, but may be switched according to an actual situation of the electronic device in the audio system.

According to another aspect, an embodiment of this application provides an audio system, including a plurality of perception devices, a decision control device, and an audio device. The perception device is configured to: obtain scenario perception information, obtain a scenario perception result based on the scenario perception information, and send first information to the decision control device, where the first information indicates the scenario perception result. The decision control device is configured to: after receiving first information from the plurality of perception devices, identify a user scenario based on scenario perception results indicated by the first information, and send second information to the audio device, where the second information indicates the user scenario. The audio device is configured to: after receiving the second information from the decision control device, adjust an audio output effect based on the user scenario indicated by the second information. The audio output effect includes one or more of noise control, equalizer EQ adjustment, or volume adjustment.

For example, the perception device may be a plurality of devices of a mobile phone, a watch, and/or a headset. The audio device may be a headset. The decision control device in the audio system may be a mobile phone. The display device may be a mobile phone or a watch. The mobile phone may be a decision control device, a perception device, or a display device. The watch may be a perception device, or may be a display device. The headset may be an audio device, or may be a perception device.

In a possible design, noise control includes a noise reduction frequency band and a noise reduction level, and/or a transparent transmission frequency band and a transparent transmission level.

In a possible design, the audio output effect further includes audio prompt information.

In another possible design, scenario perception information includes one or more of image information, sound information, or motion status information.

In another possible design, scenario perception information further includes one or more of the following: location information, ambient light information, cellular communication information, application information, or heart rate information.

In another possible design, that the audio device is configured to adjust an audio output effect based on the user scenario indicated by the second information includes: adjusting the audio output effect based on the user scenario indicated by the second information and a correspondence between a user scenario and audio output effect information. The correspondence is preset on the audio device or from the decision control device.

In another possible design, the audio system further includes a display device. The decision control device is further configured to send third information to the display device, where the third information indicates the user scenario. The display device is configured to: after receiving the third information, display the user scenario and/or the audio output effect information corresponding to the user scenario indicated by the third information.

In another possible design, the display device is further configured to: configure or modify the correspondence between a user scenario and audio output effect information in response to a first preset operation of a user for a display interface of the display device; and send a configured or modified correspondence to the decision control device.

In another possible design, the display device is further configured to: set a correspondence between a user scenario and a perception device in response to a second preset operation performed by a user on a display interface of the display device; and send the set correspondence between a user scenario and a perception device to the decision control device.

In another possible design, the audio system includes a first electronic device, and the first electronic device is a perception device or an audio device. The first electronic device is configured to: enter a target mode after detecting a third preset operation of the user; and negotiate with another electronic device that is connected for communication to determine a perception device, a decision control device, an audio device, and a display device in the audio system, where the perception device, the decision control device, the audio device, and the display device that are determined through negotiation are all configured to enter a target mode.

In another possible design, the decision control device is further configured to switch from one electronic device in the audio system to another electronic device in the audio system.

It may be understood that, for beneficial effects of the audio system, refer to beneficial effects of the audio control method. Details are not described herein.

According to another aspect, an embodiment of this application provides an audio control method, applied to an audio device. The method includes: The audio device receives second information, where the second information indicates a user scenario. The audio device adjusts an audio output effect based on the user scenario indicated by the second information. The audio output effect includes one or more of noise control, equalizer EQ adjustment, or volume adjustment.

For example, the audio device may be a headset or another electronic device having an audio output function. In this solution, the audio device may accurately control the audio output effect from a plurality of dimensions and a plurality of aspects based on a current user scenario, so that the audio output effect can better match a user requirement in the current user scenario. This meets diversified scenario requirements of the user, and reduces manual adjustment operations of the user.

In a possible design, noise control includes a noise reduction frequency band and a noise reduction level, and/or a transparent transmission frequency band and a transparent transmission level.

In this way, for noise control of audio output, the audio device may perform fine-grained control at a finer granularity level, so that an audio output effect better matches a current user scenario, instead of only performing noise reduction on an entire frequency band of the audio.

The audio device may receive the second information from the decision control device.

In another possible design, the audio output effect further includes audio prompt information.

In other words, the audio device may provide a related prompt to the user by adjusting audio playing content.

In another possible design, that the audio device adjusts an audio output effect based on the user scenario indicated by the second information includes: The audio device adjusts the audio output effect based on the user scenario indicated by the second information and a correspondence between a user scenario and audio output effect information. The correspondence is preset on the audio device or from the decision control device.

In other words, the audio device may adjust the audio output effect in real time based on the current user scenario and the set correspondence between a user scenario and audio output effect information, so that the current audio output effect matches the real-time user scenario.

In another possible design, the method further includes: The audio device obtains scenario perception information, and obtains a scenario perception result based on the scenario perception information. The audio device sends fourth information, where the fourth information indicates the scenario perception result.

In other words, the audio device may also be a perception device, and may obtain scenario perception information, and send a scenario perception result corresponding to the scenario perception information to another device to identify a user scenario.

According to another aspect, an embodiment of this application provides an audio device, including one or more processors, a memory, and one or more computer programs, where the one or more computer programs are stored in the memory. When the computer programs are executed by the one or more processors, the audio device is enabled to: receive second information, where the second information indicates a user scenario; and adjust an audio output effect based on the user scenario indicated by the second information, where the audio output effect includes one or more of noise control, equalizer EQ adjustment, or volume adjustment.

In a possible design, noise control includes a noise reduction frequency band and a noise reduction level, and/or a transparent transmission frequency band and a transparent transmission level.

In another possible design, the audio output effect further includes audio prompt information.

In another possible design, that the audio device adjusts an audio output effect based on the user scenario indicated by the second information includes: The audio device adjusts the audio output effect based on the user scenario indicated by the second information and a correspondence between a user scenario and audio output effect information. The correspondence is preset on the audio device or from the decision control device.

In another possible design, when the computer programs are executed by the one or more processors, the audio device is further enabled to: obtain scenario perception information, obtain a scenario perception result based on the scenario perception information; and send fourth information, where the fourth information indicates the scenario perception result.

It may be understood that, for beneficial effects of the audio device, refer to beneficial effects of the audio control method applied to the audio device. Details are not described herein.

According to another aspect, an embodiment of this application provides an audio control method, applied to a decision control device. The method includes: The decision control device receives first information from a plurality of perception devices, where the first information indicates a scenario perception result to a user. The decision control device identifies a user scenario based on the scenario perception result indicated by the first information. The decision control device sends second information to an audio device, where the second information indicates the user scenario.

For example, the decision control device may be an electronic device having a strong computing capability, for example, a mobile phone. In this solution, the decision control device may accurately identify, based on a perception capability of a plurality of perception devices and with reference to a multi-dimensional scenario perception result, a user scenario obtained through fine division. The decision control device may further notify the audio device of the identified user scenario, so that the audio device accurately controls an audio output effect from a plurality of dimensions and a plurality of aspects based on the user scenario. In this way, the audio output effect can better match a user requirement in the current user scenario, meet diversified scenario requirements of the user, and reduce manual adjustment operations of the user.

In a possible design, the scenario perception information corresponding to the scenario perception result includes one or more of image information, sound information, or motion status information.

In other words, the decision control device may obtain scenario perception results corresponding to user scenario perception information in a plurality of dimensions and a plurality of angles, such as image information, sound information, and motion status information, to determine a user scenario more accurately.

In another possible design, the scenario perception information further includes one or more of the following: location information, ambient light information, cellular communication information, application information, or heart rate information.

In other words, the decision control device may obtain scenario perception results corresponding to rich user scenario perception information in more dimensions and from more angles, to determine a user scenario more accurately.

In another possible design, the method further includes: The decision control device sends a correspondence between a user scenario and audio output effect information to the audio device.

In this way, the audio device can adjust an audio output effect in real time based on the correspondence and the current user scenario.

In another possible design, the method further includes: The decision control device sends third information to a display device, where the third information indicates the user scenario.

In this way, the display device may present related information to the user based on the user scenario sent by the decision control device.

In another possible design, the method further includes: The decision control device receives a configured or modified correspondence between a user scenario and audio output effect information from the display device.

In this way, the decision control device may store or send, to the audio device, the correspondence between a user scenario and audio output effect information that is configured or modified by the user by using the display device.

In another possible design, the method further includes: The decision control device receives a correspondence between a user scenario and a perception device from the display device.

In this way, the decision control device may determine, based on the correspondence between a user scenario and a perception device, a perception device used to identify a corresponding user scenario.

In another possible design, the method further includes: The decision control device obtains scenario perception information, and obtains a scenario perception result based on the scenario perception information. That the decision control device identifies a user scenario based on the scenario perception result indicated by the first information includes: The decision control device identifies the user scenario based on the scenario perception result indicated by the first information and the scenario perception result obtained by the decision control device.

In other words, the decision control device may also be a perception device, and may obtain the scenario perception information and the scenario perception result, and identify the user scenario with reference to a scenario perception result of another perception device.

According to another aspect, an embodiment of this application provides a decision control device, including one or more processors, a memory, and one or more computer programs. The one or more computer programs are stored in the memory, and when the computer programs are executed by the one or more processors, the decision control device performs the following steps: receiving first information from a plurality of perception devices, where the first information indicates a scenario perception result; identifying a user scenario based on the scenario perception result indicated by the first information; and sending second information to an audio device, where the second information indicates the user scenario.

In a possible design, scenario perception information corresponding to the scenario perception result includes one or more of image information, sound information, or motion status information.

In another possible design, scenario perception information corresponding to the scenario perception result further includes one or more of the following: location information, ambient light information, cellular communication information, application information, or heart rate information.

In another possible design, when the computer programs are executed by the one or more processors, the decision control device is further enabled to perform the following step: sending a correspondence between a user scenario and audio output effect information to the audio device.

In another possible design, when the computer programs are executed by the one or more processors, the decision control device is further enabled to perform the following step: sending third information to a display device, where the third information indicates the user scenario.

In another possible design, when the computer programs are executed by the one or more processors, the decision control device is further enabled to perform the following step: receiving a configured or modified correspondence between a user scenario and audio output effect information from a display device.

In another possible design, when the computer programs are executed by the one or more processors, the decision control device is further enabled to perform the following step: receiving a correspondence between a user scenario and a perception device from a display device.

In another possible design, when the computer programs are executed by the one or more processors, the decision control device is further enabled to perform the following steps: obtaining scenario perception information, and obtaining a scenario perception result based on the scenario perception information. The identifying a user scenario based on the scenario perception result indicated by the first information includes: identifying the user scenario based on the scenario perception result indicated by the first information and the scenario perception result obtained by the decision control device.

It may be understood that for beneficial effects of the decision control device, refer to the beneficial effects of the audio control method applied to the decision control device. Details are not described herein.

According to another aspect, an embodiment of this application provides a graphical user interface (graphical user interface, GUI), applied to an electronic device. The electronic device includes a touchscreen, a memory, and one or more processors. The one or more processors are configured to execute one or more computer programs stored in the memory. The graphical user interface includes a first GUI displayed on the touchscreen. The first GUI includes a user scenario and/or audio output effect information corresponding to the user scenario. The audio output effect information includes one or more of noise reduction control effect information, equalizer EQ adjustment effect information, or volume information.

In other words, the electronic device may present, on the GUI, the user scenario and/or the audio output effect information corresponding to the user scenario to a user, so that the user can learn of a current audio output effect. Noise control may include a noise reduction frequency band and a noise reduction level, and/or a transparent transmission frequency band and a transparent transmission level.

In a possible design, the graphical user interface further includes: a second GUI displayed on the touchscreen; and a third GUI displayed on the touchscreen in response to a fourth preset operation performed by the user on the second GUI, where the third GUI is used to configure or modify a correspondence between a user scenario and audio output effect information.

The second GUI may be the same as or different from the first GUI. In this way, the user may configure or modify the correspondence between a user scenario and audio output effect information through the GUI.

In another possible design, the graphical user interface further includes a fourth GUI displayed on the touchscreen in response to a fifth preset operation performed by the user on the second GUI, where the fourth GUI is used to set a correspondence between a user scenario and a perception device.

In this way, the user may set the correspondence between a user scenario and a perception device through the GUI.

According to another aspect, an embodiment of this application provides an audio processing apparatus. The apparatus is included in an electronic device. The apparatus has a function of implementing behavior of the electronic device in any one of the foregoing aspects and possible designs, so that the electronic device performs the audio control method performed by the electronic device in any possible design of any one of the foregoing aspects. The function may be implemented by hardware, or may be implemented by hardware executing corresponding software. The hardware or the software includes at least one module or unit corresponding to the foregoing function. For example, the apparatus may include a display unit, a determining unit, a processing unit, and the like. The electronic device may be a perception device, a decision control device, an audio device, or a display device.

According to still another aspect, an embodiment of this application provides an electronic device, including one or more processors and a memory. The memory stores code. When the code is executed by the electronic device, the electronic device is enabled to perform the audio control method in any possible design of any one of the foregoing aspects. The electronic device may be a perception device, a decision control device, an audio device, or a display device.

According to another aspect, an embodiment of this application provides a computer-readable storage medium, including computer instructions. When the computer instructions are run on a computer or a processor, the computer or the processor is enabled to perform the audio control method in any one of the foregoing aspects or possible designs.

According to still another aspect, an embodiment of this application provides a computer program product. When the computer program product runs on a computer or a processor, the computer or the processor is enabled to perform the audio control method in any one of the foregoing aspects or possible designs.

### BRIEF DESCRIPTION OF DRAWINGS

FIG. 1 is a schematic diagram of an architecture of an audio system according to an embodiment of this application;
FIG. 2 is a schematic diagram of a structure of an electronic device according to an embodiment of this application;
FIG. 3A and FIG. 3B are a flowchart of an audio control method according to an embodiment of this application;
FIG. 4A is a schematic diagram of a headset and a mode switching control according to an embodiment of this application;
FIG. 4B(a) to FIG. 4B(c) are a schematic diagram of a group of interfaces according to an embodiment of this application;
FIG. 4C is a schematic diagram of an interface according to an embodiment of this application;
FIG. 4D is a schematic diagram of another interface according to an embodiment of this application;
FIG. 4E is a schematic diagram of still another interface according to an embodiment of this application;
FIG. 5A is a schematic diagram of another group of interfaces according to an embodiment of this application;
FIG. 5B(a) to FIG. 5B(c) are a schematic diagram of still another group of interfaces according to an embodiment of this application;
FIG. 6A is a schematic diagram of an architecture of another audio system according to an embodiment of this application;
FIG. 6B is a flowchart of another audio control method according to an embodiment of this application;
FIG. 6C is a flowchart of still another audio control method according to an embodiment of this application;
FIG. 7 is a schematic diagram of architectures of internal systems of a mobile phone and a headset according to an embodiment of this application;
FIG. 8A is a schematic diagram of an architecture of still another audio system according to an embodiment of this application;
FIG. 8B-1 and FIG. 8B-2 are a flowchart of yet another audio control method according to an embodiment of this application; and

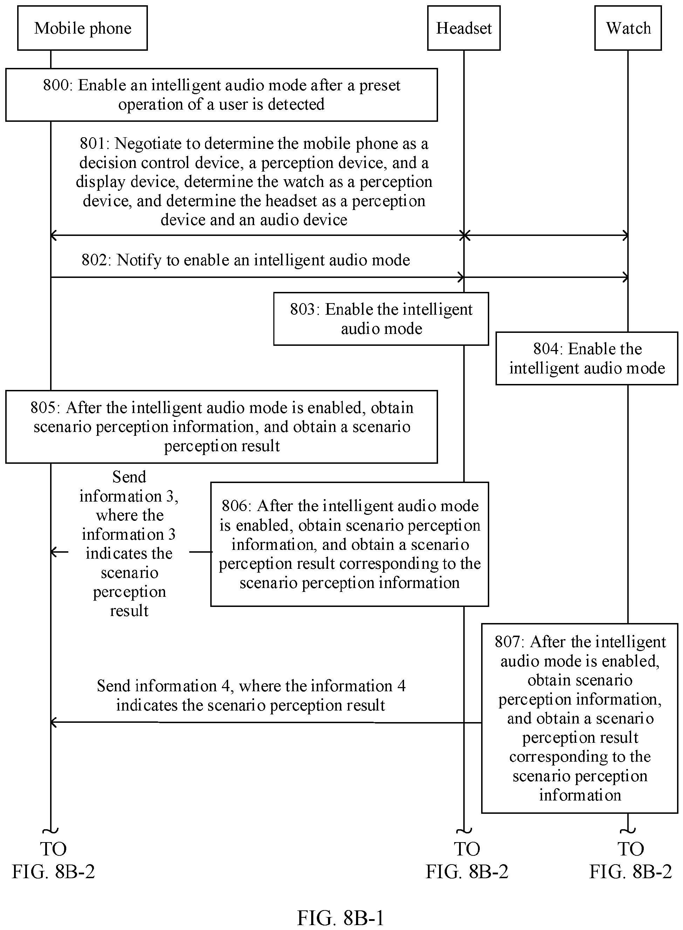

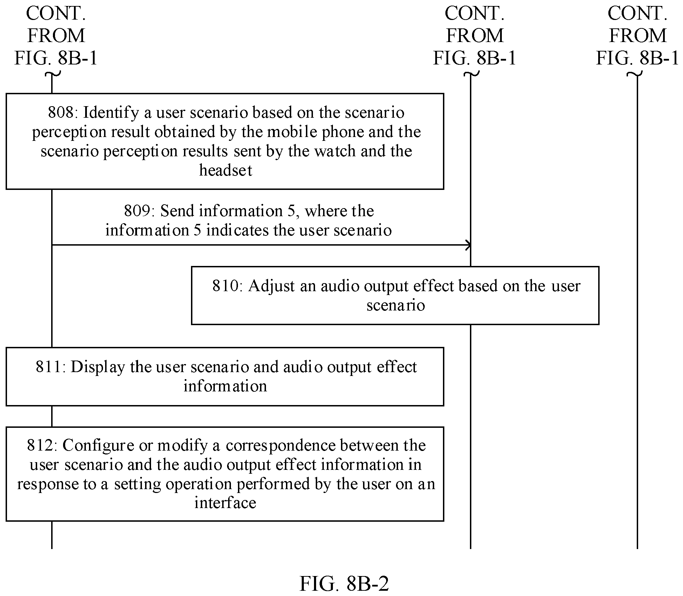

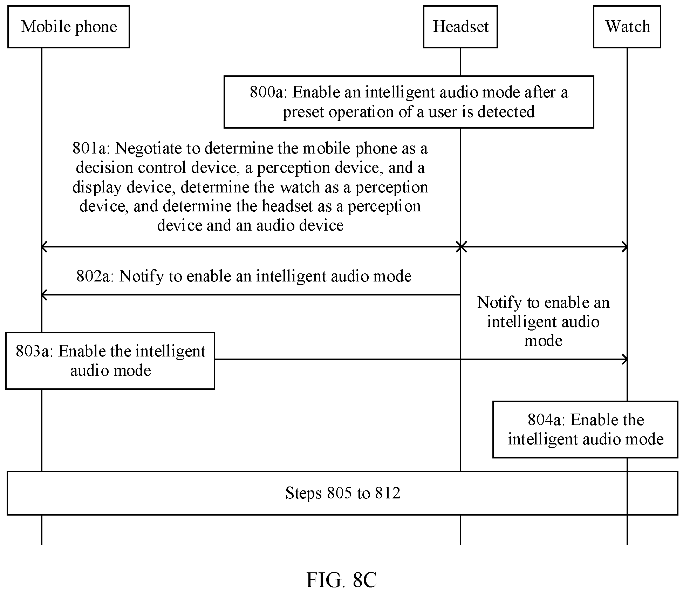

FIG. 8C is a flowchart of still yet another audio control method according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of' means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of means two or more.

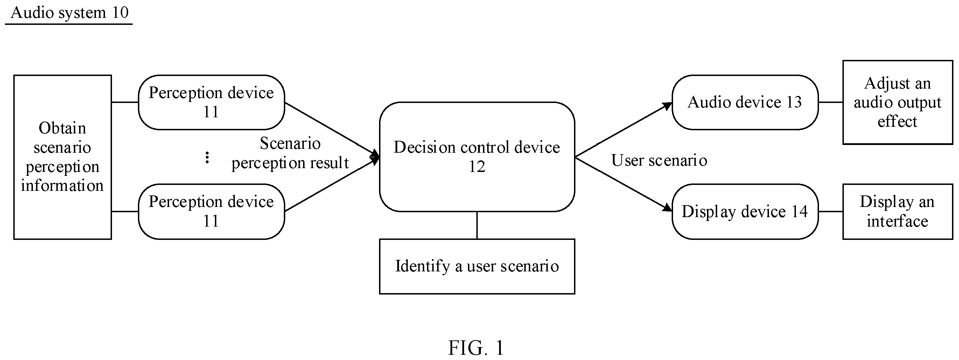

For an architecture of an audio system in embodiments of this application, refer to FIG. 1. As shown in FIG. 1, an audio system 10 includes electronic devices of different roles (which may also be referred to as role devices), such as a plurality of perception devices 11, a decision control device 12, an audio device 13, and a display device 14. The plurality of perception devices 11, the decision control device 12, the audio device 13, and the display device 14 may communicate with each other in a wireless manner, or may communicate with each other in a wired manner. For example, the wireless manner may include a manner such as wireless local area network (wireless local area network, WLAN) (for example, Wi-Fi) communication, Bluetooth (Bluetooth, BT) communication, cellular mobile communication, global navigation satellite system (global navigation satellite system, GNSS) communication, frequency modulation (frequency modulation, FM) communication, near field communication (near field communication, NFC), ZigBee communication, infrared (infrared, IR) communication, or universal 2.4G/5G frequency band communication.

In some embodiments, the electronic devices in the audio system may communicate with each other in a same wireless manner or a same wired manner. Certainly, the electronic devices may also communicate with each other in different wireless manners. In some other embodiments, some electronic devices in the audio system may communicate with each other in a wireless manner, and other electronic devices may communicate with each other in a wired manner. In some other embodiments, some electronic devices in the audio system may communicate with each other in a wireless manner (for example, Bluetooth), and some other electronic devices may communicate with each other in another wireless manner (for example, Wi-Fi). A specific communication manner used between the electronic devices in the audio system is not limited in this embodiment of this application.

The perception device shown in FIG. 1 includes a plurality of sensor components configured to obtain scenario perception information, for example, an accelerometer, a gyroscope, a magnetometer, a camera, or a heart rate meter. The perception device may obtain the scenario perception information by using the sensor component, process the scenario perception information collected by the sensor component, to obtain a scenario perception result, and send the scenario perception result to the decision control device. For example, the perception device may be a device such as a mobile phone, a smartwatch (watch for short below), a smart band (band for short below), a headset, an augmented reality (augmented reality, AR) device or a virtual reality (virtual reality, VR) device, a tablet computer, a vehicle-mounted device, a notebook computer, an ultra-mobile personal computer (ultra-mobile personal computer, UMPC), a netbook, or a personal digital assistant (personal digital assistant, PDA). A specific type of the electronic device is not limited in this embodiment of this application.

The decision control device shown in FIG. 1 may be an electronic device having a strong computing capability, and may identify a user scenario based on a scenario perception result sent by each perception device, and send the user scenario to the audio device and the audio device, for example, may be a device such as a mobile phone or a watch.

The audio device shown in FIG. 1 may be an electronic device with a sound output function, and may adaptively adjust an audio output effect based on a user scenario sent by the decision control device. For example, the audio device may be a wireless headset (for example, a Bluetooth headset), a wired headset, or an AR/VR with a sound output function.

The display device shown in FIG. 1 is an electronic device having a display function, and may be configured to display an interface, for example, may be a mobile phone, a watch, or an AR/VR.

In this embodiment of this application, the perception devices in the audio system may be distributed at different locations, and are configured to obtain scenario perception information in a plurality of dimensions. For example, the scenario perception information may include a plurality of combinations of the following information: image information (or referred to as visual information), sound information (for example, ambient sound information), location information, motion status information, ambient light information, cellular communication information, application information, heart rate information, or the like. The perception device may be further configured to process the scenario perception information in a plurality of dimensions, to obtain scenario recognition results in a plurality of dimensions, and send the scenario recognition results in a plurality of dimensions to the decision control device. The decision control device is configured to identify a user scenario based on the scenario perception information provided by the perception device, and send the identified user scenario to the audio device. The decision control device may also be a control center for multi-device collaboration in the audio system, and may manage statuses of the connected sensor devices, the audio device, and the display device. The audio device adjusts, based on the user scenario, an audio output effect that matches the user scenario. The audio output effect includes an audio effect, audio prompt information, and/or the like. The display device is configured to display an interface, to implement functions such as function on/off, scenario and audio output effect display, and user interaction for a user.

In some embodiments, the perception device, the audio device, and the display device may be devices carried by the user, and the devices may communicate with each other through near field communication (for example, Bluetooth or Wi-Fi), so that the perception device can perceive a current user scenario in real time. In this case, the audio device can adjust an audio output effect in real time based on the user scenario, and the display device can display related information of the user scenario and the audio output effect in real time. For example, the perception device, the audio device, and the display device may be a mobile phone, a headset, or a wearable device such as a watch, a band, or an AR/VR.

In some other embodiments, the decision control device in the audio system may also be a device carried by the user, and the decision control device may also communicate with another device in the audio system through near field communication. In this way, the decision control device may receive, in a short distance, a scenario perception result sent by the perception device in time, to identify a user scenario, and send the user scenario to the audio device and the display device in a short distance in time, to separately adjust an audio output effect and perform corresponding display.

In this embodiment of this application, the electronic devices of different roles in the audio system may be independent physical devices. Alternatively, a same physical device in the audio system may have one or more roles. For example, a mobile phone may be a perception device, a decision control device, and a display device in the audio system.

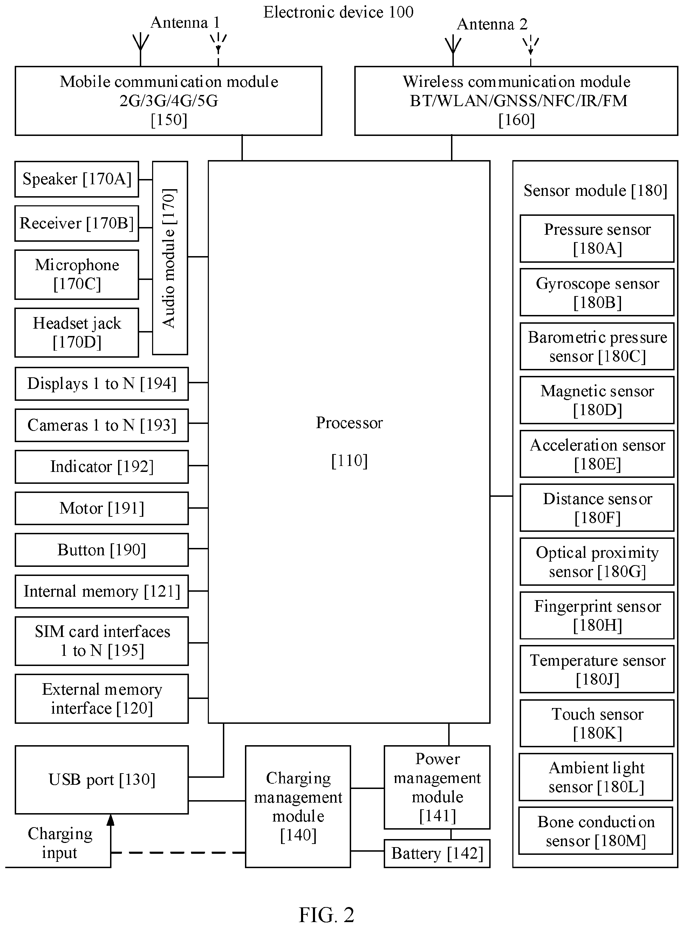

For example, FIG. 2 is a schematic diagram of a structure of an electronic device 100 in an audio system. As shown in FIG. 2, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, when the electronic device 100 is different role devices in an audio system, the electronic device 100 may include control and storage components such as a processor 110 and an internal memory 121. The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. A memory may be further disposed in the processor 110, and is configured to store instructions and data. In some embodiments, the memory in the processor 110 is a cache. The memory may store an instruction or data that has been used or cyclically used by the processor 110. If the processor 110 needs to use the instruction or the data again, the processor 110 may directly invoke the instruction or the data from the memory. This avoids repeated access, reduces waiting time of the processor 110, and improves system efficiency.

It may be further understood that, when the electronic device 100 is different role devices in the audio system, the electronic device 100 may specifically include different components, for example, may include some or all of the components shown in FIG. 2, or may include another component that is not shown in FIG. 2.

For example, when the electronic device 100 is a perception device, the electronic device 100 includes a sensor component such as the sensor module 180, the camera 193, or the microphone 170C, and is configured to obtain scenario perception information. The electronic device 100 may further include the wireless communication module 160, the mobile communication module 150, or the like, configured to send a scenario perception result corresponding to the scenario perception information to a decision control device.

For the sensor module 180, the gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of the flip cover by using the magnetic sensor 180D. Further, a feature such as automatic unlocking of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, such as a photodiode. The light emitting diode may be an infrared light emitting diode. The electronic device 100 emits infrared light by using the light emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object nearby. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The mobile communication module 150 may provide a solution that includes wireless communication such as 2G, 3G, 4G, and 5G and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

For example, the components such as the gyroscope sensor 180B and the acceleration sensor 180E may be configured to obtain user motion status information in the scenario perception information, the optical proximity sensor 180G may be configured to obtain wearing status information of the user, the ambient light sensor 180L may be configured to obtain ambient light information, the microphone 170C may be configured to obtain sound information, the mobile communication module 150 may be configured to obtain cellular communication information and obtain user location information through positioning by a base station, the wireless communication module 160 may be configured to obtain GNSS location information, and the camera 193 may be configured to obtain image information. The camera 193 configured to obtain image information may be a camera component used for photographing or video recording, or may be a sensor component specially used for environment scenario perception. In some embodiments, a component configured to obtain image information in the scenario perception information may be a low power consumption always-on device, and the obtained image information may be related to user privacy information. Therefore, the obtained image information may be stored in a secure area of the electronic device 100 for processing, to avoid privacy leakage.

For another example, when the electronic device 100 is a decision control device, the electronic device 100 includes the wireless communication module 160, the mobile communication module 150, or the like, and is configured to obtain a scenario perception result from the perception device, and send a user scenario obtained through identification to the audio device or the display device. The processor 110 of the electronic device 100 may identify the user scenario based on the scenario perception result.

For another example, when the electronic device 100 is an audio device, the electronic device 100 includes the audio module 170, the receiver 170B, the microphone 170C, the headset jack 170D, or the like. The processor 110 of the electronic device 100 may indicate, based on a user scenario, a component such as the audio module 170 to adjust an audio output effect. The electronic device 100 further includes the wireless communication module 160, the mobile communication module 150, or the like, configured to obtain information such as the user scenario from the decision control device.

For another example, when the electronic device 100 is a display device, the electronic device 110 includes the display 194, to implement functions such as function on/off, scenario and audio output effect display, and user interaction for the user. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. The electronic device 100 further includes the wireless communication module 160, the mobile communication module 150, or the like, configured to obtain information such as a user scenario from the decision control device.

In this embodiment of this application, the audio system includes a plurality of perception devices, and the plurality of perception devices may be located at different locations, so that current scenario perception information of the user can be obtained from a plurality of dimensions, a plurality of angles, a plurality of directions, and a plurality of locations, and a corresponding scenario perception result can be obtained. A user scenario identified by the decision control device based on multi-dimensional perception capabilities of the plurality of perception devices and with reference to the multi-dimensional scenario perception result is more accurate.

It may be understood that there may alternatively be one perception device. For example, the perception device may be a mobile phone, a watch, or a headset.

Division of user scenarios may be fine, and the decision control device may accurately identify, based on the multi-dimensional perception capabilities and the multi-dimensional perception information of the plurality of perception devices, a user scenario obtained through fine division. For example, the user scenarios may include: taking an airplane, taking a car, taking a high-speed railway, taking a subway, taking a ship, taking an outdoor walk, running outdoors, running on a treadmill, in a library, in a cafe, in a shopping mall, or in an office.

Compared with identifying a user scenario based on single-dimensional scenario perception information, in this embodiment of this application, a user scenario can be identified more accurately and stably based on a plurality of dimensions of scenario perception information, to avoid a problem that an audio effect is frequently switched and user audio experience is poor because a recognition result of a user scenario frequently changes with real-time change of scenario perception information in a single dimension (for example, the scenario perception information includes only sound information or includes only motion status information).

In addition, because the audio system includes a plurality of perception devices, when some of the perception devices encounter a problem and cannot normally obtain scenario perception information, another perception device may also normally obtain the scenario perception information, and the decision control device can still identify a user scenario based on a scenario perception result corresponding to the scenario perception information. Therefore, stability of user scenario identification is good

In addition, the multi-dimensional perception information obtained based on the multi-dimensional perception capabilities of the plurality of perception devices may reflect information of the user in various aspects in a current user scenario from a plurality of layers. Based on this, according to the audio control method provided in this embodiment of this application, an audio output effect of the audio device may be controlled from a plurality of dimensions and a plurality of aspects, so that the audio output effect can better match a user audio requirement in the current user scenario.

For example, the audio output effect may include an audio effect and/or audio prompt information. The audio effect may include a plurality of dimensions such as noise control, equalizer EQ adjustment (which may also be referred to as frequency response curve adjustment), and volume adjustment. The noise control may further include a noise reduction frequency band and a noise reduction level, a frequency band and a transparent transmission level, and the like. For example, according to the audio control method provided in this embodiment of this application, processing such as noise reduction and transparent transmission may be performed from a perspective of a frequency band with a finer granularity, instead of only performing noise reduction and transparent transmission on an entire frequency band, so that an audio output effect can better match a user audio requirement in a current user scenario.

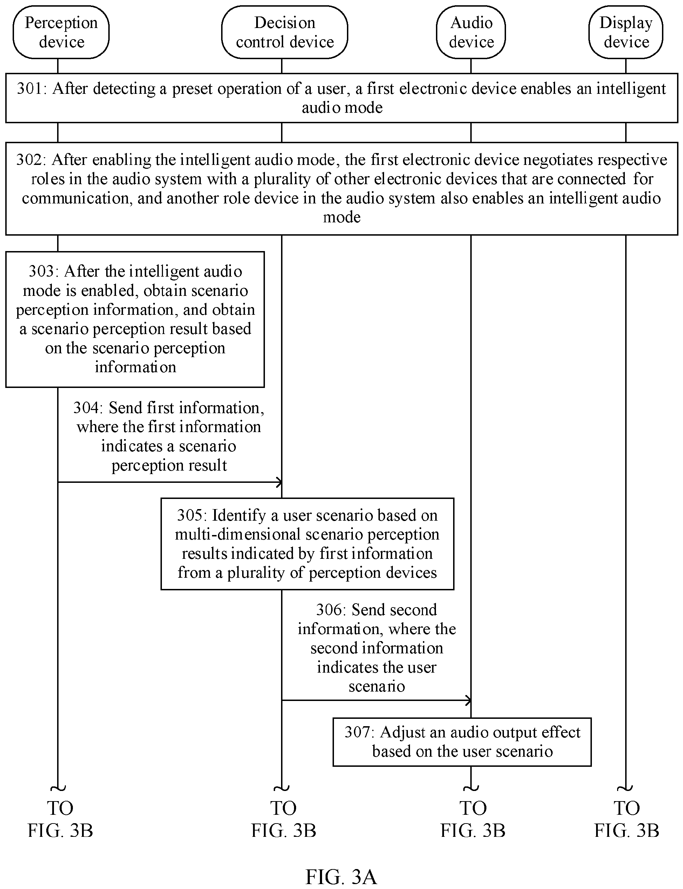

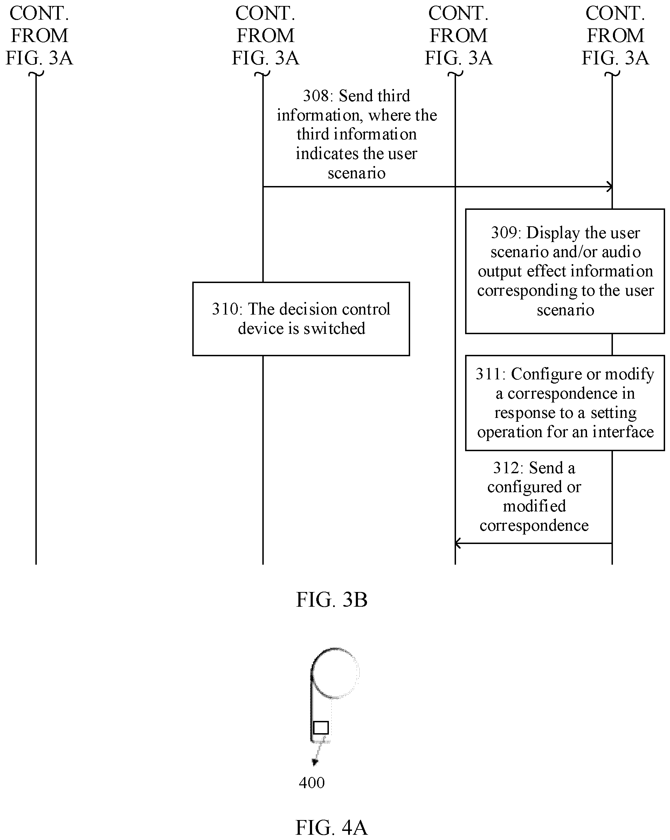

The following describes the audio control method provided in embodiments of this application from a perspective of each role device in an audio system. For example, refer to FIG. 3A and FIG. 3B. An audio control method provided in an embodiment of this application includes the following steps.

301: After detecting a preset operation of a user, a first electronic device enables an intelligent audio mode.

The first electronic device is a role device in an audio system. For example, the first electronic device is an audio device that has an audio output capability in the audio system. The first electronic device may support a plurality of audio modes, for example, the intelligent audio mode, a noise reduction mode, a transparent transmission mode, or a disabled mode. After detecting an operation of selecting the intelligent audio mode by the user, the first electronic device may enable the intelligent audio mode, to adaptively adjust an audio output effect based on a user scenario identified in the intelligent audio mode.

For example, the first electronic device is a headset shown in FIG. 4A, and a mode switching control 400 is disposed on the headset. After detecting an operation of tapping the mode switching control 400 by the user, the headset switches an audio mode to the intelligent audio mode. For another example, the first electronic device may enable the intelligent audio mode in response to a voice instruction operation of the user.

It may be understood that the intelligent audio mode may also have another name, for example, an audio adaptation mode, a scenario adaptation mode, or a smart audio mode. A specific mode name is not limited in this embodiment of this application. In the intelligent audio mode, the audio system may identify a user scenario based on multi-dimensional scenario perception information, to adaptively adjust an audio output effect of an audio device based on the user scenario.

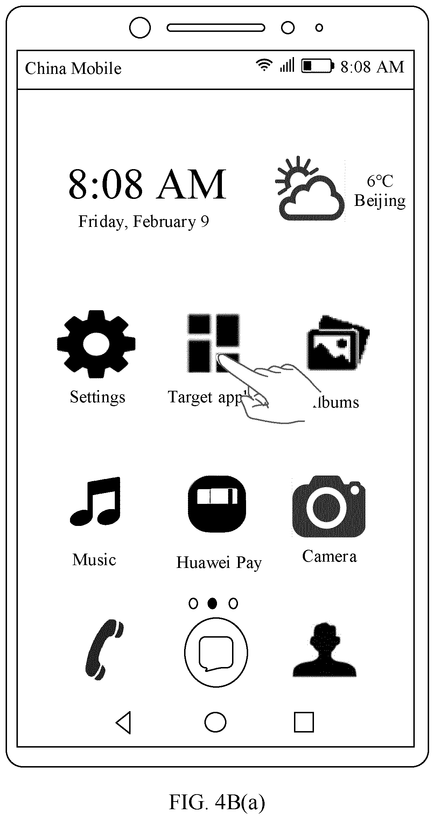

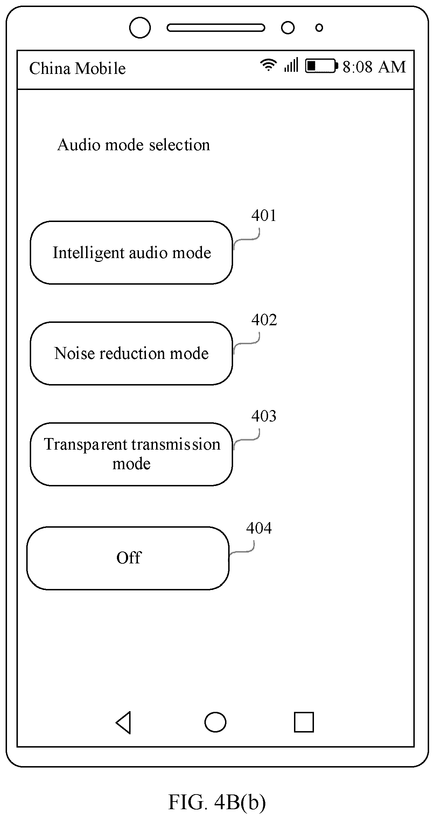

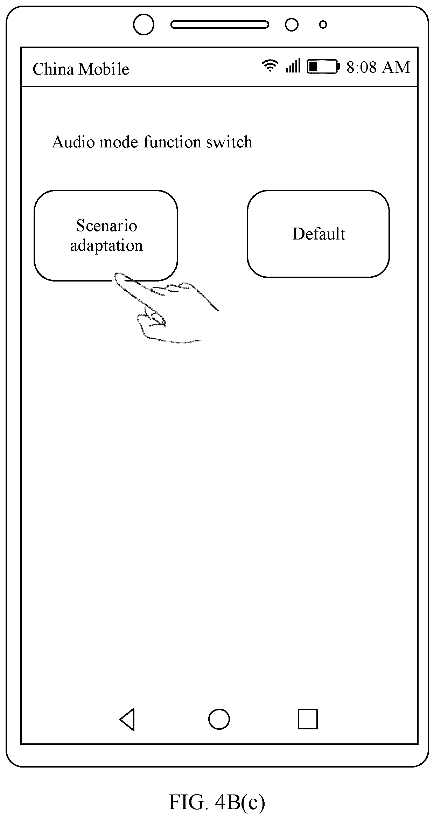

For another example, the first electronic device is a display device having a display capability in the audio system. For example, the first electronic device may be a mobile phone. For example, refer to FIG. 4B(a). After the first electronic device detects an operation of tapping an icon of a target application (application, APP) on an interface by the user, the first electronic device displays an interface of the target APP shown in FIG. 4B(b) or FIG. 4B(c). The first electronic device enables the intelligent audio mode after detecting an operation of enabling the intelligent audio mode by the user on the interface of the target APP. For example, refer to FIG. 4B(b). The interface of the target APP includes audio mode controls, for example, an intelligent audio mode control 401, a noise reduction mode control 402, a transparent transmission mode control 403, and a disabled control 404. After detecting an operation of tapping the intelligent audio mode control 401 by the user, the first electronic device enables the intelligent audio mode, or the user may enable a switch corresponding to the intelligent audio mode control 401 to enable the intelligent audio mode. For another example, refer to FIG. 4B(c). The interface of the target APP includes a scenario adaptation control and/or a default control. After detecting an operation of tapping the scenario adaptation control by the user, the first electronic device enables the intelligent audio mode, or the user may enable a switch corresponding to the scenario adaptation control and/or the default control to enable the intelligent audio mode.

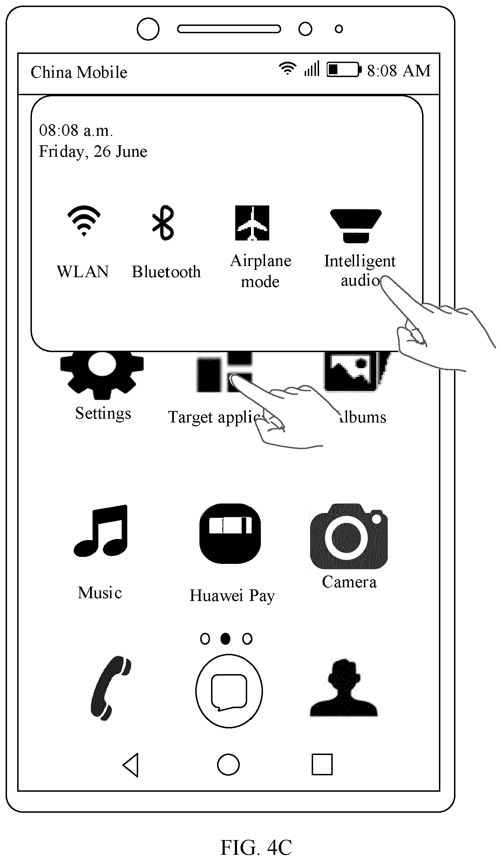

For another example, refer to FIG. 4C. A shortcut control of the intelligent audio mode is displayed on a pull-down/pull-up shortcut menu, a desktop, or a leftmost screen of the first electronic device, and the first electronic device enables the intelligent audio mode after detecting an operation of tapping the shortcut control by the user.

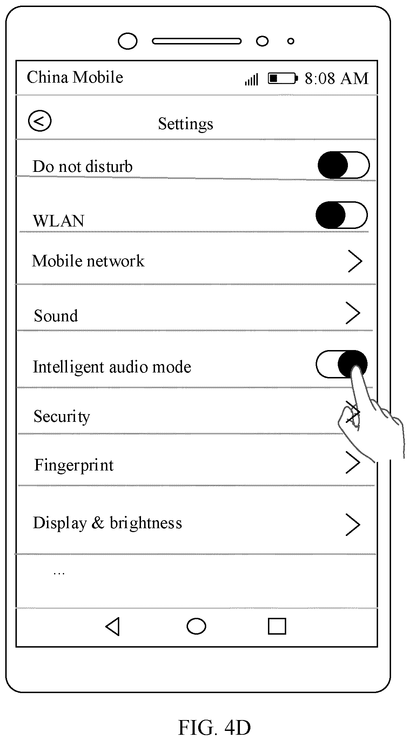

For another example, refer to FIG. 4D. The first electronic device enables the intelligent audio mode in response to a selection operation of the user on a system setting interface.

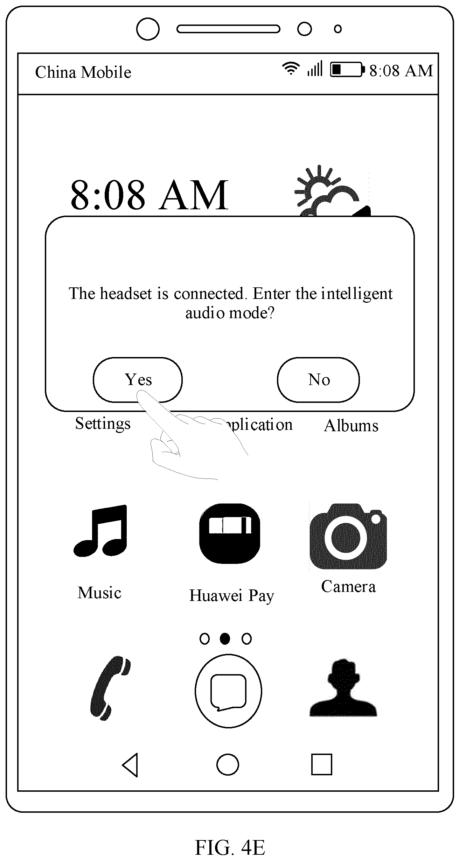

For another example, refer to FIG. 4E. After detecting that a communication connection is established to an audio device having an audio output capability, the first electronic device may automatically display a pop-up window to prompt the user whether to enter the intelligent audio mode, and enable the intelligent audio mode in response to an instruction operation of the user.

It may be understood that the first electronic device may alternatively enable the intelligent audio mode in a plurality of manners in response to a preset operation of the user. This manner is not specifically limited in this embodiment of this application.

302: After enabling the intelligent audio mode, the first electronic device negotiates respective roles in the audio system with a plurality of other electronic devices that are connected for communication, and another role device in the audio system also enables an intelligent audio mode.

In this embodiment of this application, a plurality of electronic devices including the first electronic device may establish communication connections to each other in a same or different communication manners, and the communication manner may be a wired manner or a wireless manner. A plurality of electronic devices that are interconnected (that is, establish communication connections with each other) may be directly connected (that is, directly establish a communication connection). For example, interconnection between every two devices in A, B, and C is referred to as interconnection between A, B, and C. Alternatively, a plurality of interconnected electronic devices may be indirectly connected. For example, a case in which A is connected to B and B is connected to C may also be referred to as interconnection between A, B, and C.

After detecting an operation of enabling the intelligent audio mode by the user, the first electronic device may indicate, through a communication connection, another interconnected electronic device to negotiate a role device in the audio system. Corresponding software and a communication interface are preset on an electronic device supporting the audio control method provided in this embodiment of this application, and a perception capability, a decision control capability, a display capability, or an audio output capability supported by the device may be notified to another interconnected electronic device. A plurality of interconnected electronic devices negotiate and determine, based on a capability supported by each electronic device, each role device such as a decision control device, a perception device, a display device, and an audio output device in the audio system.

There may be a plurality of negotiation manners of the role device in the audio system. For example, each electronic device that is connected for communication may send a capability supported by the electronic device in the audio system to a target electronic device, and the target electronic device determines each role device.

In some embodiments, the target electronic device is an electronic device having a decision control capability. After detecting an operation of enabling the intelligent audio mode by the user, the first electronic device may indicate, through a communication connection, another interconnected electronic device to negotiate a role device in the audio system. After receiving notification information of the first electronic device, the electronic device having the decision control capability may notify another electronic device of the decision control capability of the electronic device having the decision control capability. The another electronic device sends a capability supported by the another electronic device to the electronic device having the decision control capability, and the electronic device having the decision control capability determines each role device in the audio system.

In some other embodiments, the target electronic device is the first electronic device. After detecting an operation of enabling the intelligent audio mode by the user, the first electronic device may indicate, through a communication connection, another interconnected electronic device to negotiate a role device in the audio system. The another electronic device sends the capability supported by the another electronic device to the first electronic device, and the first electronic device determines each role device in the audio system.

In a negotiation process, when the plurality of electronic devices have a strong computing capability, for example, when the plurality of electronic devices have a decision control capability, the target electronic device may determine a decision control device from the plurality of electronic devices, for example, determine an electronic device with a highest decision priority as the decision control device. For example, the interconnected electronic devices include a mobile phone and a watch, each of the mobile phone and the watch has a decision control capability, and a decision priority of the mobile phone is higher than that of the watch. Therefore, the target electronic device may determine the mobile phone as a decision control device.

In a negotiation process, when a plurality of electronic devices have an audio output capability, an electronic device of a default type may be used as an audio output device, or an electronic device with a high audio output priority may be used as an audio output device. For example, the interconnected electronic devices include a mobile phone and a headset. Each of the mobile phone and the headset has an audio output function, and an audio output priority of the headset is higher than that of the mobile phone. Therefore, the target electronic device may determine the headset as an audio output device.

In some embodiments, when a plurality of interconnected electronic devices include a plurality of headsets, a priority of a headset connected to the decision control device is high. When there are a plurality of headsets connected to the decision control device, in an implementation, the plurality of headsets are all audio output devices. In another implementation, a headset that is being worn by the user is an audio output device. In still another implementation, a headset is selected randomly as an audio output device. In yet another implementation, the user specifies a headset as an audio output device.

In a negotiation process, when a plurality of interconnected electronic devices include a plurality of electronic devices that have a display capability, one of the electronic devices that have a display capability is used as a display device; or all the plurality of electronic devices that have a display capability may be used as display devices; or one of the electronic devices that have a display capability is used as a primary display device, and another electronic device that has a display capability is used as a secondary display device.

It should be noted that in this embodiment of this application, in a plurality of interconnected electronic devices, all electronic devices having a perception capability may be used as perception devices. There may be a plurality of perception devices in the audio system, so that rich scenario perception information in a plurality of dimensions can be obtained from different locations, different angles, and different directions.

It may be understood that the foregoing plurality of interconnected electronic devices may be directly or indirectly connected, that is, role devices in the audio system are directly or indirectly connected. For example, the decision control device, the perception device, the display device, and the audio output device are connected to each other. For another example, the perception device, the display device, and the audio output device are separately connected to the decision control device. For another example, the perception device and the display device are separately connected to the decision control device, there is no communication connection between the audio device and the decision control device, and the audio device is connected to one of the perception devices.

In this embodiment of this application, a plurality of role devices in the audio system may alternatively be located on a same electronic device, that is, a same electronic device may also include a plurality of role devices. For example, the perception device and the audio output device may be located on a same electronic device (for example, a headset). For another example, the display device, the decision control device, and the perception device may be located on a same electronic device (for example, a mobile phone). A communication connection between different role devices on a same electronic device is a data channel inside the electronic device, and data is transmitted between different roles devices through the data channel inside the electronic device.

The foregoing is described by using an example in which a plurality of interconnected electronic devices automatically negotiate their respective roles in the audio system. In some other embodiments of this application, an electronic device having a display function may display a plurality of interconnected electronic devices to the user, and the user determines role devices such as a perception device, a decision control device, a display device, and an audio device in the audio system.

In this embodiment of this application, after the role device in the audio system is determined, after enabling the intelligent audio mode, the first electronic device may directly indicate another role device in the audio system to enable an intelligent audio mode, or indicate, by using the decision control device, another role device in the audio system to enable an intelligent audio mode. Correspondingly, the another role device in the audio system enables the intelligent audio mode after receiving notification information.

In some embodiments, when the role device in the audio system is a wearable device, the wearable device enables an intelligent audio mode only after detecting that the wearable device is worn by the user. However, when the wearable device is not worn by the user, the wearable device may not accurately reflect a status of the user. Therefore, the intelligent audio mode may not be enabled, and processing such as perception, decision-making, display, or audio output is not performed, to reduce power consumption of the wearable device.

303: After enabling the intelligent audio mode, the perception device obtains scenario perception information, and obtains a scenario perception result based on the scenario perception information.

After enabling the intelligent audio mode, the plurality of perception devices may enable a perception function, to obtain rich scenario perception information in a plurality of dimensions from a plurality of locations, angles, and directions. The plurality of perception devices may be electronic devices near the user, and are usually electronic devices carried by the user. In this case, real-time scenario perception information in a current user scenario can be accurately obtained.

The scenario perception information is original data obtained by a sensor component of the perception device. A data volume of the original data is usually large. Therefore, the perception device may not directly send the scenario perception information to a decision control center, but processes the scenario perception information to obtain the scenario perception result, and then sends the scenario perception result with a small data volume to the decision control device to identify a user scenario. In this solution, a volume of data transmitted between the perception device and the decision control device can be reduced, and processing load of the decision control device can also be reduced, so that the decision control device can directly identify the user scenario based on the scenario perception result.

As described above, the scenario perception information may include a plurality of combinations of the following information: image information, sound information, motion status information, location information, ambient light information, cellular communication information, application information, heart rate information, or the like.

The image information may include collected image data. A scenario perception result corresponding to the image information may include information such as image content or a subject type of an image. The scenario perception result may represent a facial expression, a gesture, an environment, or the like of the user.

The sound information may include collected sound data. A scenario perception result corresponding to the sound information may include a sound type, a sound source, volume, or the like.

The location information may include location data obtained through GPS positioning or base station positioning. A scenario perception result corresponding to the location information may include a location type (for example, a school, a tourist attraction, or a residential area) corresponding to a location, a location change speed, or the like.

The motion status information may include data such as an acceleration, a speed, an angular velocity, or a vibration frequency. A scenario perception result corresponding to the motion status information may include being still, walking, running, taking a car, or the like.

The ambient light information may include information such as a luminance value of ambient light. A scenario perception result corresponding to the ambient light information may include high ambient luminance, low ambient luminance, or being blocked by an object, or the like.

The cellular communication information may include information such as whether an accessed base station changes, a change speed of an accessed base station, and a change of signal strength between the accessed base station and the perception device. A scenario perception result corresponding to the cellular communication information may include a fast/slow movement speed, a movement by bus, a car, a train, or an airplane, and the like.

The application information may include user data obtained through an upper-layer application APP interface, locally parsed SMS message/multimedia message content, and the like. Similar to context intelligence information, a scenario perception result corresponding to the application information may include a to-do list, historical tasks, a planned event, a schedule, a to-be-picked up package, or the like of the user. For example, the scenario perception result corresponding to the application information may be that the user has booked an air ticket, the user has set an alarm clock reminder, the user has set a schedule, or the like.

The heart rate information may include information such as a heart rate value and a strong/weak heartbeat. A scenario perception result corresponding to the heart rate information may include being excited, being dull, whether to perform intense exercise, and the like.

The perception device may process the scenario perception information such as the image, the sound, and the motion status in a machine learning manner, to obtain the corresponding scenario perception result. For example, a neural network model is preset on the perception device, and may identify input image information or sound information to obtain a subject type of an image, a sound type, or the like.

In some other embodiments, the perception device does not process the scenario perception information to obtain the scenario perception result, but directly sends the scenario perception information to the decision control device. The decision control device obtains the scenario perception result through multi-dimensional scenario perception information processing, to identify a user scenario based on the multi-dimensional scenario perception results. In this solution, processing load of the perception device with a poor computing capability can be reduced, so that the decision control device with a strong computing capability performs processing to obtain the scenario perception result.

304: The perception device sends first information to the decision control device, where the first information indicates the scenario perception result.

Each of the plurality of perception devices in the audio system may send, to the decision control device through a communication connection to the decision control device by using the first information, the scenario perception result obtained through scenario perception information processing.

305: The decision control device identifies a user scenario based on multi-dimensional scenario perception results indicated by the first information from the plurality of perception devices.

After receiving the multi-dimensional scenario perception results separately sent by the plurality of perception devices, the decision control device identifies the user scenario with reference to the multi-dimensional scenario perception results. The decision control device may execute a preset algorithm that identifies different user scenarios. For example, the algorithm includes a decision tree of a preset rule and various AI models (for example, a neural network model) based on probability statistics.

In some embodiments, different types of scenario perception results have different identification priorities. For example, the decision control device may determine a current user scenario by using a decision tree, where a scenario perception result with a high identification priority is located at the top of the decision tree, and a scenario perception result with a low identification priority is located at the bottom of the decision tree. For example, a priority of a scenario perception result corresponding to a sound is higher than a priority of a scenario perception result corresponding to an image, and a priority of an image perception result is higher than that of application information. The decision control device preferentially identifies a user scenario based on scenario perception results corresponding to a sound and an image.

For example, for identification of a user scenario of taking an airplane, a decision tree-based scenario identification algorithm may be: If a scenario perception result sent by the perception device includes identifying roaring of an airplane engine, the decision control device determines whether the scenario perception result further includes identifying that a current environment includes an airplane or is in an airplane compartment. If confidence levels of the perception and identification results are greater than or equal to a preset value, the decision control center further obtains a scenario perception result (for example, the user has booked an air ticket) of application information (for example, an SMS message or a ticket booking APP), to determine that a scenario of taking an airplane is identified after re-determining that the scenario of taking an airplane is met.

If the decision control device uses an algorithm of an AI statistics model, a scenario perception result output by each perception device is used as an input of the model, and the decision control device determines, based on previous training experience of the model, that a current scenario result is a scenario of taking an airplane.

In this embodiment of this application, the plurality of perception devices are located at different locations, and may obtain current scenario perception information of the user from a plurality of dimensions, a plurality of angles, a plurality of directions, and a plurality of locations. A user scenario identified by the decision control device based on multi-dimensional perception capabilities of the plurality of perception devices and with reference to the multi-dimensional scenario perception results is more accurate. Division of user scenarios may be fine, and the decision control device may accurately identify, based on the multi-dimensional perception capabilities and the multi-dimensional perception information of the plurality of perception devices, a user scenario obtained through fine division. For example, the user scenarios may include taking an airplane, taking a car, taking a high-speed railway, taking a subway, taking a ship, walking along the street, taking an outdoor walk, running outdoors, running on a treadmill, in a library, in a cafe, in a shopping mall, or in an office.

In addition, because the audio system includes a plurality of perception devices, when some of the perception devices encounter a problem and cannot normally obtain scenario perception information, another perception device may also normally obtain the scenario perception information, and the decision control device can still identify a user scenario based on a scenario perception result corresponding to the scenario perception information. Therefore, stability of user scenario identification is good

306: The decision control device sends second information to the audio device, where the second information indicates the user scenario.

After identifying a current user scenario, the decision control device may notify the audio device of the current user scenario by using the second information, so that the audio device adjusts an audio output effect based on the user scenario.

307: After receiving the second information, the audio device adjusts the audio output effect based on the user scenario indicated by the second information.

In some embodiments, a correspondence between a plurality of user scenarios and audio output effect information is preconfigured in the audio device. After the decision control device notifies the audio device of the user scenario, the audio device may adaptively adjust the audio output effect based on preconfigured audio output effect information matching the user scenario.

In some other embodiments, the correspondence between a plurality of user scenarios and audio output effect information is preconfigured in the audio device. The correspondence between a plurality of user scenarios and audio output effect information is preconfigured in the decision control device, or the decision control device may obtain, from a device such as a cloud server, the correspondence between a plurality of user scenarios and audio output effect information. After identifying a user scenario, the decision control device sends the user scenario and audio output effect information matching the user scenario to the audio device. The audio device stores a correspondence between a user scenario and audio output effect information that matches the user scenario. After identifying the user scenario again, the decision control device may notify only the audio device of the user scenario. The audio device adaptively adjusts the audio output effect based on the previously stored audio output effect information that matches the user scenario.

In this embodiment of this application, the multi-dimensional perception information obtained based on the multi-dimensional perception capabilities of the plurality of perception devices may reflect information of the user in various aspects in a current user scenario from a plurality of layers. Therefore, the audio device may accurately control the audio output effect of the audio device from a plurality of dimensions and a plurality of aspects, so that the audio output effect can better match a user requirement in the current user scenario. For example, the audio output effect may include an audio effect and/or audio prompt information. The audio effect may include a plurality of dimensions such as noise control, EQ adjustment, and volume adjustment.

The noise control may further include a frequency band and a noise reduction level, a transparent transmission frequency band and a transparent transmission level, and the like. In this way, according to the audio control method provided in this embodiment of this application, processing such as noise reduction and transparent transmission may be performed from a perspective of a frequency band with a finer granularity, instead of only performing noise reduction and transparent transmission on an entire frequency band, so that an audio output effect can better match a user audio requirement in a current user scenario.

In an implementation, the user may further modify the correspondence between a user scenario and audio output effect information through an interface of the display device according to a personal requirement or preference. The display device may send a modified correspondence between a user scenario and audio output effect information to the decision control device. After identifying that the current user scenario is a user scenario in which the audio output effect is modified, the decision control device may send the modified correspondence between a user scenario and audio output effect information to the audio device.

308: The decision control device sends third information to the display device, where the third information indicates the user scenario.

After determining the current user scenario based on the scenario perception results sent by the plurality of perception devices, the decision control device notifies the display device of the current user scenario by using the third information, so that the display device displays related information of the user scenario.

309: The display device displays the user scenario and/or the audio output effect information corresponding to the user scenario.

In some embodiments, the display device presents the user scenario to the user on an interface. In some other implementations, the display device may display a sound effect mode corresponding to the user scenario. In some other embodiments, the display device may display, on an interface, detailed information about the user scenario and the corresponding audio output effect, for example, noise reduction control effect information, EQ adjustment effect information, or volume information. The detailed information about the audio output effect displayed by the display device may be from the audio device or the decision control device.

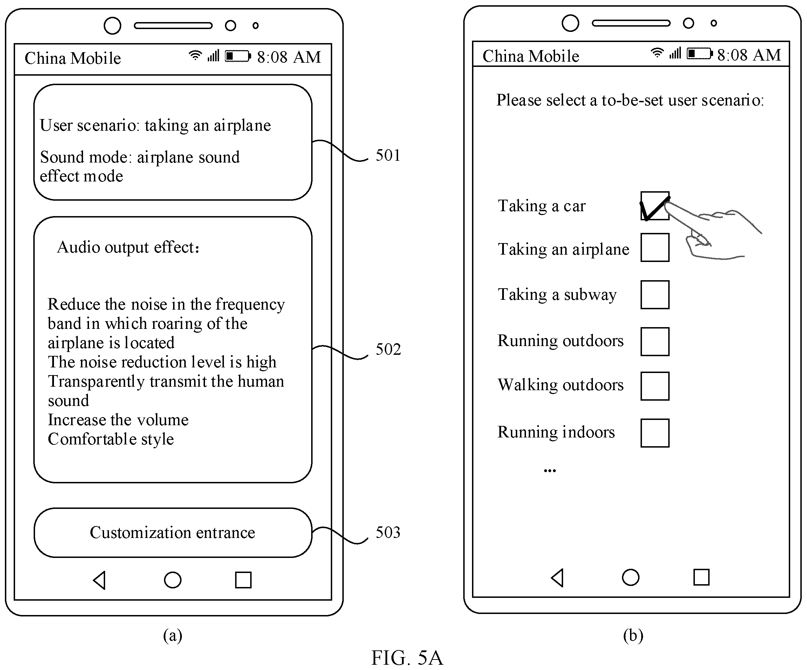

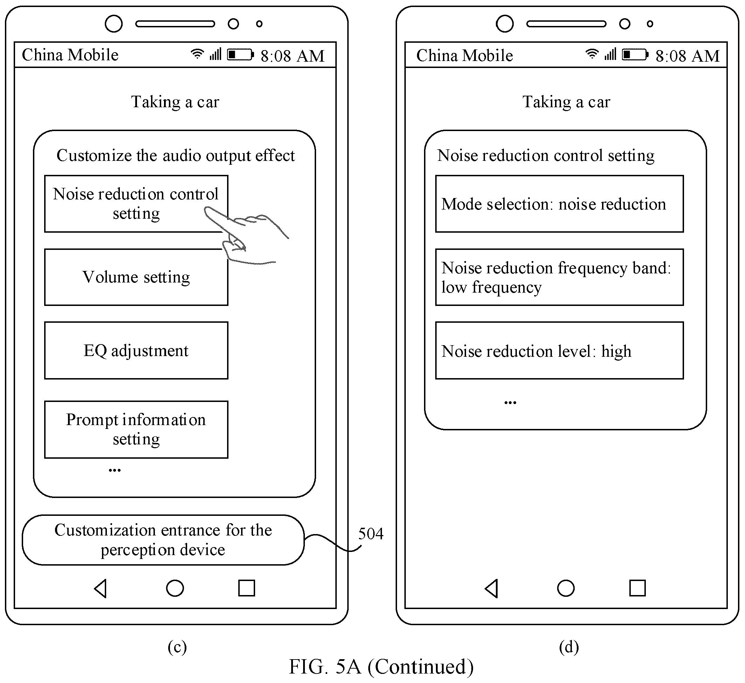

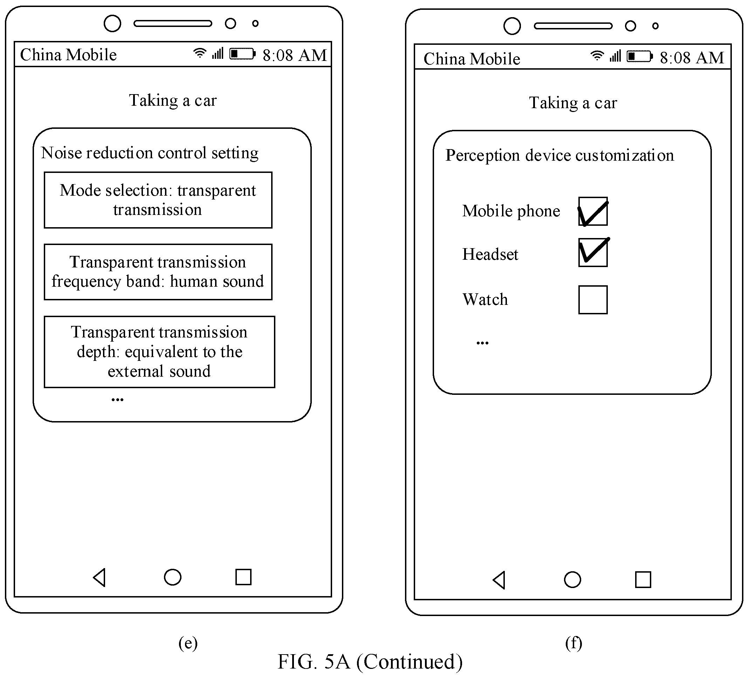

For example, refer to (a) in FIG. 5A. A display interface of the display device in the intelligent audio mode includes a scenario presentation part 501 and an audio effect part 502. The scenario presentation part presents a current user scenario and a sound effect mode corresponding to the current user scenario. The audio effect part displays specific content of the audio output effect corresponding to the current user scenario. As shown in (a) in FIG. 5A, the scenario presentation part indicates that a current scenario is a user scenario of taking an airplane, and the sound effect mode is an airplane sound effect mode. As shown in (a) in FIG. 5A, the audio effect part indicates that a current audio output effect includes: reducing noise of a frequency band in which roaring of an airplane is located, where a noise reduction level is high; transparently transmitting a human sound, increasing a volume, and a comfortable style.

In some embodiments, the method may further include the following step.

310: The decision control device is switched.

When there are a plurality of electronic devices that have a computing capability (or referred to as a decision control capability) required by the decision control device in the audio system, the decision control device may be switched between these electronic devices according to a specific rule. For example, a plurality of electronic devices having a decision control capability may score based on information such as a computing capability and/or a current electricity quantity of the electronic devices, and an electronic device with a highest current score is a current decision control device. When the previous decision control device fails (for example, the previous decision control device is disconnected from a communication connection, is powered off, stops being worn by the user, or a battery level of the previous decision control device is lower than a preset value), an electronic device with a highest score may be selected as a new decision control device according to a same mechanism, to ensure that the entire audio system runs stably for a long time.

The foregoing embodiment is described by using an example in which the correspondence between a plurality of user scenarios and audio output effect information is preconfigured in the decision control device or the audio device. In some other embodiments, the correspondence between a plurality of user scenarios and audio output effect information is preset by the user through an interface of the display device. The display device may send, to the decision control device, the correspondence that is between the user scenario and the audio output effect information and that is set by the user. The decision control device notifies the audio device of the correspondence between a user scenario and audio output effect information. When the display device is connected for communication to the audio device, the display device may alternatively directly notify the audio device of the correspondence that is between the user scenario and the audio output effect information and that is set by the user.

In some other embodiments, the user may further modify the correspondence between a user scenario and audio output effect information, and send a modified correspondence to the decision control device.

In other words, the method may further include the following steps.

311: The display device configures or modifies the correspondence between a user scenario and audio output effect information in response to an operation performed by the user on the interface.

312: The display device sends a configured or modified correspondence to the decision control device.

Herein, a process in which the user pre-configures or modifies the correspondence between a user scenario and audio output effect information is described by using an example. For example, as shown in (a) in FIG. 5A, in the intelligent audio mode, the display interface of the display device further includes a customization entry 503. After detecting an operation of tapping the customization entry 503 by the user, the display device displays a customization interface shown in (b) in FIG. 5A. The customization interface includes a customization sound effect part, and the user can select a user scenario to be set. As shown in (c) in FIG. 5A, the user may set audio output effect information that matches the selected user scenario, including noise reduction control setting, volume setting or EQ adjustment, and/or audio prompt information setting. For the noise reduction control setting, the user may further select a noise reduction mode and/or a transparent transmission mode. In the noise reduction mode, the user may set a noise reduction frequency band and/or level. In the transparent transmission mode, the user may set a transparent transmission frequency band and/or level, and the like. The noise reduction frequency band may refer to a frequency range for noise reduction, and the noise reduction level may refer to a noise reduction level and degree. The transparent transmission frequency band may refer to a frequency range for sound transparent transmission, and the transparent transmission level may refer to a sound transparent transmission level and degree.

For example, as shown in (d) in FIG. 5A, after the user scenario selected by the user is taking a car and noise reduction control setting, the user selects the noise reduction mode, sets a noise reduction frequency band to a low frequency, and sets a noise reduction level to a high level. The decision control device may uniformly send, to the audio device, a correspondence that is between each user scenario and audio output effect information and that is configured by the user, or may send, to the audio device after a user scenario is identified, a correspondence that is between the user scenario and audio output effect information and that is configured by the user.

In some embodiments of this application, to help the user configure or modify an audio output effect corresponding to a user scenario, the customization sound effect part displayed by the display device may be setting content that corresponds to noise control setting, volume setting, or EQ adjustment and that is easy to understand by the user. For example, the noise control setting includes setting of a noise reduction frequency band, a transparent transmission frequency band, a noise reduction depth, and/or a transparent transmission depth. For setting of the noise reduction frequency band, noise reduction frequency bands displayed by the display device for the user to select may include a "human sound frequency band" or a "car sound frequency band", or the like. The noise reduction depth is a degree of suppressing external noise. Noise reduction depths displayed by the display device for the user to select may include "light noise reduction", "common noise reduction", "deep noise reduction", and/or the like. For setting of the transparent transmission frequency band, transparent transmission frequency bands displayed by the display device for the user to select may include a "human sound frequency band", a "car sound frequency band", a "broadcast prompt sound frequency band", and/or the like, so that the user selects to transparently transmit a type of sound that is concerned. For setting of the transparent transmission depth, a transparent transmission degree of external noise is adjusted. Transparent transmission depths displayed by the display device for the user to select may include "weaker than the external sound", "equivalent to the external sound", "stronger than the external sound", and/or the like. For example, refer to (e) in FIG. 5A. In a user scenario of taking a car, the user may select a transparent transmission mode, set a transparent transmission frequency band to "human sound", and set a transparent transmission depth to "equivalent to the external sound". For the EQ adjustment, audio styles displayed by the display device for the user to select may include "comfort", "soothing", "blue", "resounding", "pop", "rock", "classic", "leisure", or the like.

In some other embodiments, the user may preconfigure or modify a correspondence between a user scenario and a perception device. For example, as shown in (c) in FIG. 5A, a customization interface may further include a customization entry 504 of the perception device. On the customization interface of the perception device, the user can set the correspondence between a user scenario and a perception device (or a perception device type). For example, refer to (f) in FIG. 5A. In a scenario of taking a car, the user may set the perception device to include a mobile phone and/or a headset. In some technical solutions, because electronic devices carried by the user in different time periods are different, the user may further set a correspondence between time periods and different perception devices, to obtain scenario perception information by using corresponding perception devices in the different time periods.

In other words, the user may preconfigure or modify the correspondence between a user scenarios and audio output effect information and a correspondence between user scenarios and perception devices at any time, to meet a personalized requirement or preference of the user. The display device may further send, to the decision control device, the correspondence that is between the user scenarios and the perception device and that is set by the user, so that the decision control device determines a user scenario based on a scenario perception result of a corresponding perception device.

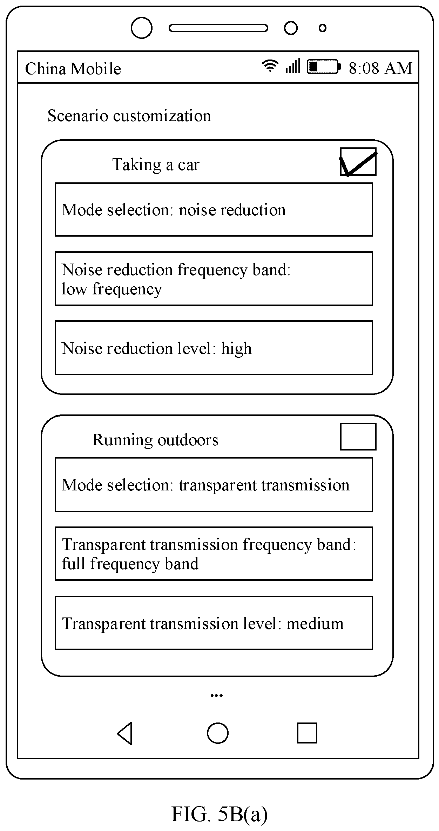

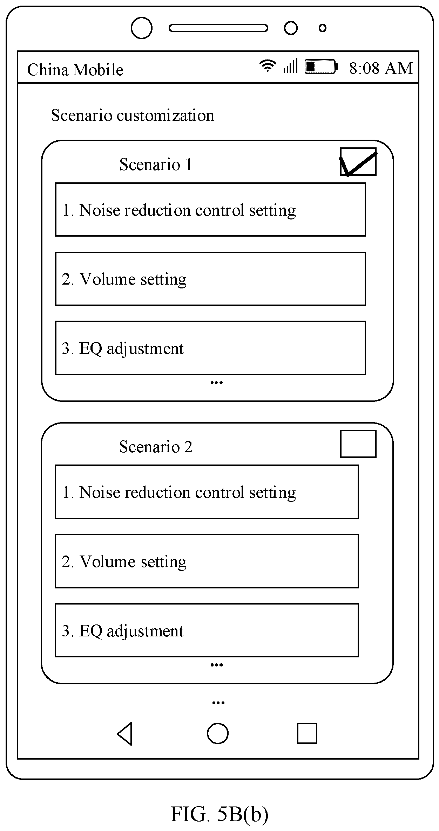

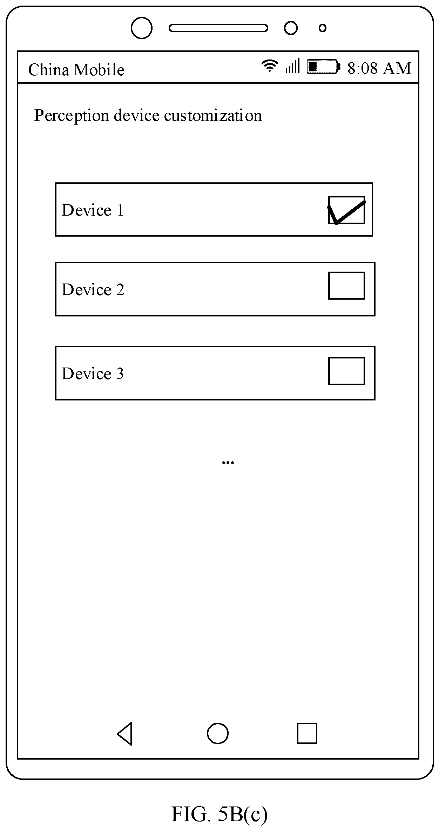

It may be understood that the user scenario and a display interface of the audio output effect shown in (a) in FIG. 5A and the customization interface shown in (b) to (f) in FIG. 5A are merely examples for description. There may be a plurality of other interface display manners. This is not limited in this embodiment of this application. For example, the customization interface may alternatively be shown as FIG. 5B(a) to FIG. 5B(c).

In the solutions described in the foregoing steps 301 to 312, the plurality of perception devices in the audio system may obtain rich user scenario perception information from a plurality of dimensions and a plurality of perspectives, and obtain corresponding scenario perception results. The decision control device may accurately identify, based on multi-dimensional perception capabilities of the plurality of perception devices and with reference to multi-dimensional scenario perception results, a user scenario obtained through fine division. The audio device may accurately control an audio output effect from a plurality of dimensions and a plurality of aspects based on the user scenario identified by the decision control device, so that the audio output effect can better match a user requirement in a current user scenario.

In other words, based on a multi-dimensional and distributed perception technology, the audio system can identify a more refined user scenario, so that identification accuracy and stability are higher, and an identification function is more reliable. The audio system can adaptively adjust a noise control effect based on a refined scenario, and set or modify an audio output effect based on the refined user scenario.

The following describes the audio control method provided in this embodiment of this application by using an example in which each role device is an electronic device of a specific type.

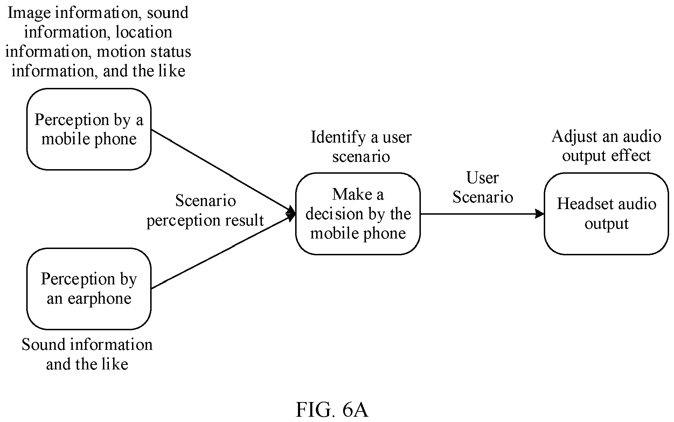

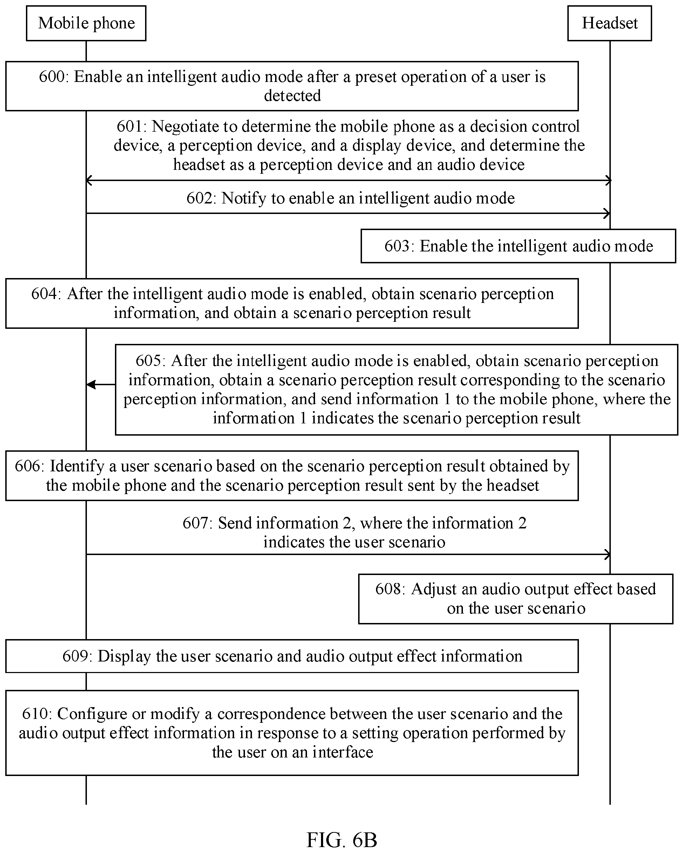

Refer to FIG. 6A. In an example, an audio system includes a mobile phone and a headset. For example, both the mobile phone and the headset are perception devices, the mobile phone is also a decision control device and a display device, the headset is also an audio device, and there is a Bluetooth connection between the mobile phone and the headset. Refer to FIG. 6B. The audio control method in this example may include the following steps.

600: After detecting a preset operation of a user, the mobile phone enables an intelligent audio mode.

The mobile phone may enable the intelligent audio mode in response to a voice instruction operation of the user. Alternatively, the mobile phone may further enable the intelligent audio mode in response to a selection operation performed by the user on an interface of the mobile phone. For a manner of enabling the intelligent audio mode by the mobile phone, refer to the method for enabling the intelligent audio mode when the first electronic device is a display device in step 301. Details are not described herein again.

601: After enabling the intelligent audio mode, the mobile phone negotiates with the headset to determine the mobile phone as a decision control device, a perception device, and a display device, and determine the headset as a perception device and an audio device.

For a process in which the mobile phone negotiates with the headset about each role device in the audio system, refer to the descriptions about the negotiation process in step 302. The mobile phone has a decision control capability, a perception capability, and a display capability. Therefore, the mobile phone is a decision control device, a perception device, and a display device. The headset has a perception capability and an audio output capability. Therefore, the headset is a perception device and an audio device.

602: The mobile phone indicates the headset to enable an intelligent audio mode.

After enabling the intelligent audio mode, the mobile phone notifies another role device (that is, the headset) in the audio system also to enable the intelligent audio mode.

603: After receiving notification information from the mobile phone, the headset enables the intelligent audio mode.

After receiving the notification information from the mobile phone, the headset in the audio system also correspondingly enables the intelligent audio mode. In some embodiments, after receiving the notification from the mobile phone, the headset may enable the intelligent audio mode. In some other embodiments, because scenario perception information obtained when the headset is not worn by the user may not accurately reflect a status of the user, the headset may enable the intelligent audio mode only after receiving the notification information of the mobile phone and determining that the headset is in a worn state, to reduce power consumption of the headset.

It should be noted that step 601 may be performed before or after steps 602 and 603. This is not limited in this embodiment of this application. For example, after enabling the intelligent audio mode, the mobile phone may first negotiate respective roles in the audio system with the headset, and then indicate the headset to enable the intelligent audio mode, or may first indicate the headset to enable the intelligent mode, and then negotiate respective roles in the audio system with the headset.

In the foregoing steps, only after the mobile phone enables the intelligent audio mode, the mobile phone and the headset negotiate their respective roles in the audio system. In some other embodiments, after establishing a communication connection, the mobile phone and the headset may negotiate their respective roles in the audio system, without a need to first enable the intelligent audio mode.

604: After enabling the intelligent audio mode, the mobile phone obtains scenario perception information, and obtains a scenario perception result.

In some embodiments, after enabling the intelligent audio mode, the mobile phone may enable scenario perception, and obtain the scenario perception information by using a sensor component. In some other embodiments, after the mobile phone enables the intelligent audio mode and receives a notification that is sent by the headset and that indicates that the mobile phone is in the worn state, the mobile phone enables scenario perception, to obtain the scenario perception information.

For example, the mobile phone is used as a perception device, and scenario perception information that may be obtained in a current user scenario includes one or more of the following: image information, sound information, location information, motion status information, ambient light information, cellular communication information, application information, or the like. After processing the obtained scenario perception information, the mobile phone obtains a corresponding scenario perception result.

For example, the scenario perception information is image information, and the scenario perception result is that an airplane appears near the user. The scenario perception information is location information, and the scenario perception result is an airport.

605: After enabling the intelligent audio mode, the headset obtains scenario perception information, obtains a scenario perception result corresponding to the scenario perception information, and sends information 1 to the mobile phone, where the information 1 indicates the scenario perception result.

As a perception device, the headset may obtain the scenario perception information, and send the obtained scenario perception result to the mobile phone by using the information 1. For example, the headset may obtain, by using a microphone, scenario perception information in the current user scenario, for example, ambient sound information, and obtain a scenario perception result corresponding to the sound information.

In this way, the mobile phone and the headset are used as a plurality of perception devices in the audio system, obtain current scenario perception information of the user at a plurality of layers from a plurality of dimensions, a plurality of angles, a plurality of directions, and a plurality of locations, and obtain corresponding scenario perception results.

606: The mobile phone identifies a user scenario based on the scenario perception result obtained by the mobile phone and the scenario perception result sent by the headset.

As a decision device, the mobile phone may accurately identify, based on a multi-dimensional perception capability of a plurality of perception devices such as the mobile phone and the headset and with reference to a multi-dimensional scenario perception result, the user scenario obtained through fine division.

Because the audio system includes a plurality of perception devices, when some of the perception devices encounter a problem and cannot normally obtain scenario perception information, another perception device may also normally obtain scenario perception information. For example, sound identification on the headset side can overcome blocking of audio perception of the mobile phone (for example, the mobile phone is in a pocket mode, a microphone is blocked, or an application conflict occurs), to improve availability of a perception function. In this case, as a decision control device, the mobile phone can still obtain a scenario perception result by using a normal perception device, to identify a user scenario. Therefore, stability of user scenario identification is good.

607: The mobile phone sends information 2 to the headset, where the information 2 indicates the user scenario.

As a decision device, the mobile phone may send the identified user scenario to the audio device by using the information 2.

608: The headset adjusts an audio output effect based on the user scenario.

As an audio device, the headset may adaptively adjust the audio output effect based on the currently identified user scenario sent by the mobile phone and a correspondence between a user scenario and audio output effect information, so that the audio output effect matches the current user scenario. The correspondence between a user scenario and audio output effect information is pre-stored in the headset, or is sent by the mobile phone to the headset after the mobile phone identifies the user scenario this time.

In this embodiment of this application, the multi-dimensional perception information obtained based on the multi-dimensional perception capabilities of the plurality of perception devices such as the mobile phone and the headset may reflect information of the user in various aspects in the current user scenario from a plurality of layers. Therefore, the headset may accurately control an audio output effect of the audio device from a plurality of dimensions and a plurality of aspects, so that the audio output effect can better match a user requirement in the current user scenario. For example, the audio output effect may include an audio effect and/or audio prompt information. The audio effect may include a plurality of dimensions such as noise control, EQ adjustment, and volume adjustment.

Noise control may be adjusting a noise condition of audio output. Noise control may include a noise reduction frequency band and a noise reduction level, a transparent transmission frequency band and a transparent transmission level, and the like. The noise reduction frequency band and the noise reduction level are used to adjust a sound frequency band (for example, a high frequency band, a medium frequency band, a low frequency band, a medium and high frequency band, a medium and low frequency band, or a full frequency band) for noise reduction processing and a noise reduction degree (for example, a high noise reduction degree, a medium noise reduction degree, or a low noise reduction degree). The transparent transmission frequency band and the transparent transmission level are used to adjust a frequency band of a sound to be transparently transmitted and a transparent transmission degree (for example, 100% or 80%). In this case, the headset may perform processing such as noise reduction and transparent transmission from a perspective of a frequency band with a finer granularity, instead of only performing noise reduction and transparent transmission only from an entire frequency band, so that an audio output effect can better match a user audio requirement in a current user scenario.

EQ adjustment is also referred to as frequency response curve control, and may be used to adjust magnitudes of electrical signals of various frequency components (for example, bass, middle bass, middle treble, high treble, or extremely high treble) of audio, to adjust a timbre, a sound field, or the like, and implement different audio styles (for example, "comfort", "blue", "resounding", "pop", "rock", "classic", or "leisure").

For example, the scenario perception information identified by the mobile phone and the headset includes application information such as travel information of the user, location information, image information, sound information, or an acceleration. The mobile phone obtains the travel information of the user. The mobile phone determines, based on the location information, that the user has arrived near an airport. The mobile phone identifies, based on the image information, that the user has entered a cabin. The mobile phone and the headset identify a take-off process based on ambient sound information. The mobile phone identifies a take-off process based on motion status information (for example, the acceleration). The mobile phone identifies, based on the foregoing information, that the user is in a scenario of taking an airplane. The headset can adjust the audio output effect based on the scenario of taking an airplane. For example, the headset can reduce noise of a frequency band in which roaring of an airplane engine is located, and a noise reduction level is high, to meet a noise reduction requirement of the user during flight. The headset can transparently transmit a human sound to meet a communication requirement. The headset can increase a volume and adjust an audio style to a comfortable style to make the user feel more comfortable during flight.

For another example, a user scenario is walking along the street, and the headset may adjust noise control to transparently transmit a sound of a car engine, a horn sound, and the like based on the user scenario of walking along the street, to ensure travel safety.

In some embodiments of this application, the audio output effect may further include audio prompt information. For example, the audio device may prompt a user scenario to the user by using a voice. For another example, the audio device may prompt the user with an audio effect corresponding to a user scenario by using a voice.

For still another example, in the correspondence between a user scenario and audio output effect information, the audio output effect information further includes audio prompt information, and the audio device may prompt the user with the audio prompt information corresponding to the user scenario by using a voice. For example, audio prompt information corresponding to the user scenario of taking an airplane is: please power off the network-connected device or start the airplane mode.

In some other embodiments of this application, audio prompt information corresponds to a user scenario and user-related information such as a user status, environment information, or time, and the audio device may prompt the user with the audio prompt information by using a voice. In other words, the headset may provide a related prompt to the user by adjusting audio playing content based on the user scenario and the user-related information such as the user status, the environment information, or the time. For example, in a user scenario of walking outdoors, if noise of a car is detected, the audio device may prompt the user by using a voice: pay attention to the car. For another example, in a user scenario of running outdoors, if a running speed of the user is too high, the audio device may prompt the user by using a voice: you are too fast, please slow down; or if a heart rate of the user is too high, the audio device may prompt the user by using a voice: your heart rate is too high, please take a rest. For still another example, in a user scenario of taking a subway, if the user is moving, the audio device may prompt the user by using a voice: the subway is running, please be careful.

609: The mobile phone displays the user scenario and the audio output effect information.

As a display device, the mobile phone may display the identified user scenario and the corresponding audio output effect information through an interface. For example, for a schematic diagram of a user scenario of taking an airplane and a display effect of audio output effect information, refer to (a) in FIG. 5A.

In some embodiments, the method may further include the following step.

610: The mobile phone configures or modifies the correspondence between a user scenario and audio output effect information in response to a setting operation performed by the user on the interface.

Based on this solution, the user may customize the correspondence between a user scenario and audio output effect information on the interface of the mobile phone, to more intelligently meet diversified audio output requirements of the user. For example, for a diagram of an interface of setting, by the user, a correspondence between a user scenario and an audio output effect information in a scenario of taking a car, refer to (c) in FIG. 5A.

In one case, a modified correspondence between a user scenario and audio output effect information takes effect. For example, if an audio output effect of a current user scenario changes, an audio output effect displayed by the mobile phone also changes accordingly. In another case, a modified correspondence between a user scenario and audio output effect information takes effect only after the user scenario is identified next time, and a current audio output effect does not change. For another example, the user may also modify or add a correspondence between another user scenario and audio output effect information.

In addition, when the user switches to another mode other than the intelligent audio mode on the headset side or the mobile phone side, the mobile phone and the headset automatically exit the intelligent audio mode, and stop adjusting an audio output effect adaptively based on a user scenario.

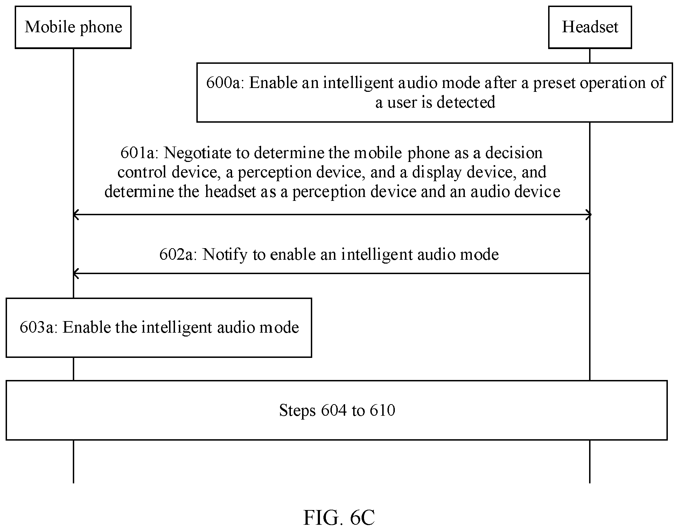

The foregoing is described by using an example in which the user enables the intelligent audio mode on the mobile phone side. In some other embodiments, the user may enable the intelligent audio mode on the headset side. Refer to FIG. 6C. In this case, steps 600 to 603 in FIG. 6B may be replaced with steps 600a to 603a.

600a: After detecting a preset operation of the user, the headset enables an intelligent audio mode.

For a manner in which the headset enables the intelligent audio mode, refer to the manner in which the intelligent audio mode is enabled when the first electronic device is an audio device having an audio output capability in step 301. Details are not described herein again.

601a: After enabling the intelligent audio mode, the headset negotiates with the mobile phone to determine the mobile phone as a decision control device, a perception device, and a display device, and determine the headset as a perception device and an audio device.

602a: The headset indicates the mobile phone to enable an intelligent audio mode.

In some embodiments, after the headset enables the intelligent audio mode, the headset indicates the mobile phone to enable the intelligent audio mode. In some other embodiments, the user can hear a corresponding audio output effect only after the headset is worn. Therefore, the headset may indicate the mobile phone to enable the intelligent audio mode only after the headset enables the intelligent audio mode and determines that the headset is in a worn state.

603a: After receiving notification information of the headset, the mobile phone enables the intelligent audio mode.

It should be noted that step 601a may be performed before or after steps 602a and 603a. This is not limited in this embodiment of this application. For example, after enabling the intelligent audio mode, the headset may first negotiate respective roles in the audio system with the mobile phone, and then indicate the mobile phone to enable the intelligent audio mode, or may first indicate the mobile phone to enable the intelligent mode, and then negotiate respective roles in the audio system with the mobile phone.

In the foregoing steps, only after the headset enables the intelligent audio mode, the headset and the mobile phone negotiate their respective roles in the audio system. In some other embodiments, after establishing a communication connection, the headset and the mobile phone may negotiate their respective roles in the audio system, without a need to first enable the intelligent audio mode.

After the foregoing step 603a, the mobile phone and the headset continue to perform steps 604 to 610.

In the solutions described in FIG. 6B or FIG. 6C, the mobile phone and the headset, as the perception device, may obtain rich user scenario perception information from a plurality of dimensions and a plurality of angles, and obtain corresponding scenario perception results. The mobile phone may accurately identify, based on a multi-dimensional perception capability of a plurality of perception devices and with reference to a multi-dimensional scenario perception result, the user scenario obtained through fine division. The headset may accurately control an audio output effect from a plurality of dimensions and aspects based on a user scenario identified by the mobile phone, so that the audio output effect can better match a user requirement in a current user scenario.

In other words, based on a multi-dimensional and distributed perception technology, the audio system can identify a more refined user scenario, so that identification accuracy and stability are higher, and an identification function is more reliable. In addition, the audio system can adaptively adjust a noise control effect based on a refined scenario, and set or modify an audio output effect based on the refined user scenario.

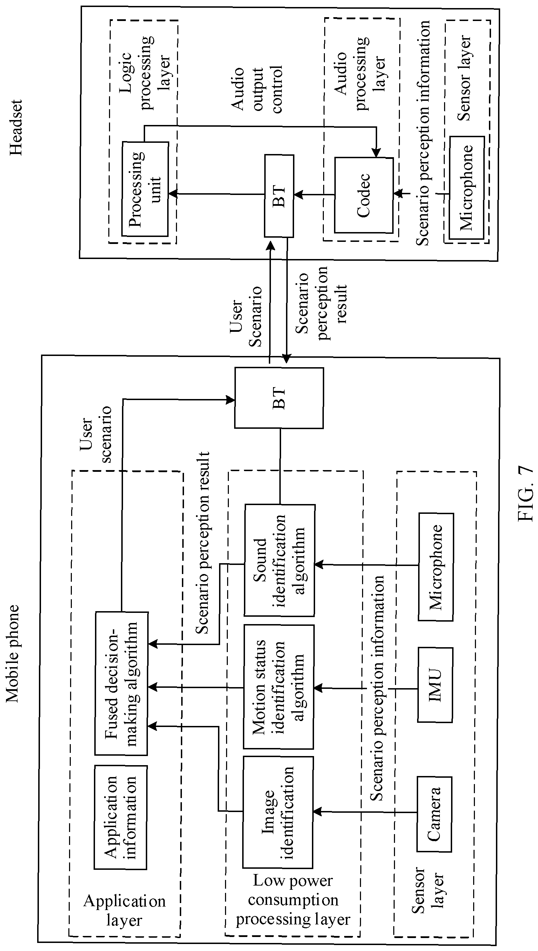

A case in which the audio system shown in FIG. 6B and FIG. 6C includes the mobile phone and the headset is used as an example. FIG. 7 is a schematic diagram of architectures of internal systems of a mobile phone and a headset.

As shown in FIG. 7, the mobile phone includes a plurality of modules such as a sensor layer, a low power consumption processing layer, an application layer, and a Bluetooth (BT) module. The sensor layer includes multi-dimensional low-power sensor components required for scenario perception, for example, a microphone, a camera, and an inertial measurement unit (inertial measurement unit, IMU). The low power consumption processing layer includes a plurality of modal identification algorithm modules such as an image identification module, a motion status identification module, and a sound identification module. The modal identification algorithm module is configured to receive scenario perception information returned by the sensor layer, run a corresponding modal recognition algorithm, and obtain a modal identification analysis result, that is, the foregoing scenario perception result. The sensor layer and the low power consumption processing layer are low power consumption components to ensure that a perception algorithm can run for a long time. The Bluetooth module may further receive a scenario perception result from the headset. The application layer runs a fused decision algorithm to perform comprehensive determining to identify a user scenario by combining application information (such as related information of a passenger code, a taxi-hailing APP, and a ticket booking APP), a scenario perception result returned by the low power consumption processing layer, and a scenario perception result sent by the headset, and transfers the identified user scenario to a Bluetooth headset by using the Bluetooth module.

The headset includes a sensor layer, an audio processing layer, a logic processing layer, and a Bluetooth (BT) module. The sensor layer mainly includes a sensor component such as a microphone (for example, including a primary microphone and a secondary microphone) of the headset, and is configured to collect sound information in scenario perception information. The audio processing layer may include components such as an audio codec, an analog-to-digital (A/D) converter, and a filter, and is configured to complete processing such as A/D conversion, feature extraction, noise reduction, and transparent transmission of an audio signal. The logic processing layer may include a processing unit such as a DSP or an MCU, and is configured to modify a setting of the audio processing layer based on a user scenario that is identified by the mobile phone and that is received by the Bluetooth module, to adjust a volume, an EQ, or the like. As described above, an audio output effect may include an audio effect, audio prompt information, and/or the like. An audio effect may include noise control, EQ adjustment, volume adjustment, and the like.

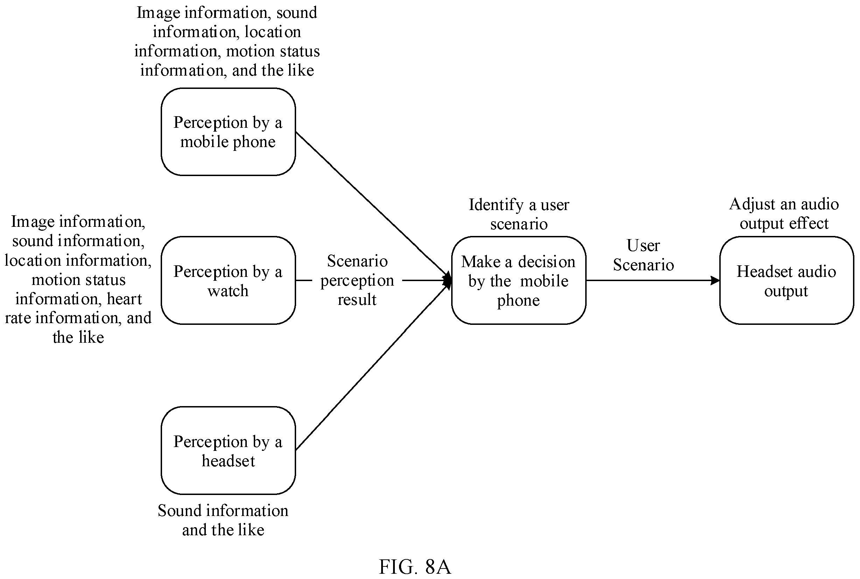

Refer to FIG. 8A. In another example, the audio system includes a mobile phone, a watch, and a headset. The mobile phone, the watch, and the headset are all perception devices, the mobile phone is also a decision control device and a display device, and the headset is also an audio device. There is a Bluetooth connection between the mobile phone and the headset, and there is a Bluetooth connection between the mobile phone and the watch. The audio control method in this example is similar to the related descriptions in FIG. 6B or FIG. 6C, and is only briefly described below. Refer to FIG. 8B-1 and FIG. 8B-2. The audio control method in this example may include the following steps.

800: After detecting a preset operation of a user, a mobile phone enables an intelligent audio mode.

801: After enabling the intelligent audio mode, the mobile phone negotiates with a watch and a headset to determine the mobile phone as a decision control device, a perception device, and a display device, determine the watch as a perception device, and determine the headset as a perception device and an audio device.

802: After enabling the intelligent audio mode, the mobile phone notifies the watch and the headset to enable an intelligent audio mode.

803: After receiving notification information from the mobile phone, the headset enables the intelligent audio mode.

In some embodiments, after receiving the notification information from the mobile phone, the headset immediately enables the intelligent audio mode. In some other embodiments, the headset may enable the intelligent audio mode only after receiving the notification information of the mobile phone and determining that the headset side is in a worn state, to reduce power consumption of the headset.

804: After receiving the notification information from the mobile phone, the watch enables the intelligent audio mode.

In some embodiments, after receiving the notification information of the mobile phone, the watch immediately enables the intelligent audio mode. In some other embodiments, the watch may enable the intelligent audio mode only after receiving the notification information of the mobile phone and determining that the watch is in a worn state, to reduce power consumption of the headset.

805: After enabling the intelligent audio mode, the mobile phone obtains scenario perception information, and obtains a scenario perception result.

As a perception device, the mobile phone may obtain the scenario perception information and a corresponding scenario perception result after enabling the intelligent audio mode. In some embodiments, after enabling the intelligent audio mode, the mobile phone enables scenario perception, and obtain the scenario perception information by using a sensor component. In some other embodiments, after the mobile phone enables the intelligent audio mode and receives a notification that is sent by the headset and that indicates that the mobile phone is in the worn state, the mobile phone enables scenario perception, to obtain the scenario perception information.

806: After enabling the intelligent audio mode, the headset obtains scenario perception information, obtains a scenario perception result corresponding to the scenario perception information, and sends information 3 to the mobile phone, where the information 3 indicates the scenario perception result.

As a perception device, the headset may obtain scenario perception information such as sound information after enabling the intelligent audio mode, and send a scenario perception result corresponding to the scenario perception information to the mobile phone.

807: After enabling the intelligent audio mode, the watch obtains scenario perception information, obtains a scenario perception result corresponding to the scenario perception information, and sends information 4 to the mobile phone, where the information 4 indicates the scenario perception result.

For example, as a perception device, the watch may obtain one or more of the following scenario perception information after enabling the intelligent audio mode: image information, sound information, location information, motion status information, application information, heart rate information, or the like.

In this way, the mobile phone, the watch, and the headset, as a plurality of distributed perception devices in an audio system, may obtain current scenario perception information of a plurality of layers of the user from a plurality of dimensions, a plurality of angles, a plurality of directions, and a plurality of locations, and obtain corresponding scenario perception results.

808: The mobile phone identifies a user scenario based on the scenario perception result obtained by the mobile phone and the scenario perception results sent by the watch and the headset.

As a decision device, the mobile phone may accurately identify, based on a multi-dimensional perception capability of a plurality of perception devices such as the mobile phone, the watch, and the headset and with reference to a multi-dimensional scenario perception result, the user scenario obtained through fine division. In addition, because the audio system includes a plurality of perception devices, when some of the perception devices encounter a problem and cannot normally obtain scenario perception information, another perception device may also normally obtain scenario perception information. For example, scenario perception on the headset side and the watch side can overcome blocking of perception of the mobile phone device, to improve availability of a perception function. In this case, as a decision control device, the mobile phone can still obtain a scenario perception result by using a normal perception device, to identify a user scenario. Therefore, stability of user scenario identification is good.

809: The mobile phone sends information 5 to the headset, where the information 5 indicates the user scenario.

As a decision device, the mobile phone may send the identified user scenario to the audio device.

810: The headset adjusts an audio output effect based on the user scenario.

As an audio device, the headset may adaptively adjust the audio output effect based on the user scenario sent by the mobile phone, so that the audio output effect matches the current user scenario.

The multi-dimensional perception information obtained based on multi-dimensional perception capabilities of a plurality of perception devices of the mobile phone, the watch, and the headset may reflect information of the user in various aspects in the current user scenario from a plurality of layers. Therefore, the headset may accurately control an audio output effect of the audio device from a plurality of dimensions and a plurality of aspects, so that the audio output effect can better match a user requirement in the current user scenario. For example, the audio output effect may include an audio effect and/or audio prompt information. The audio effect may include a plurality of dimensions such as noise control, EQ adjustment, and volume adjustment.

In this example, a user scenario and a user status can be more accurately identified based on scenario perception on the mobile phone side and the headset side and scenario perception on the watch side, so that adaptive adjustment of an audio output effect in more dimensions can be guided. In this way, the audio output effect can be adaptively adjusted in a wider dimension. For example, a user scenario and a user status identified when the user uses the headset are perceived with reference to heart rate information and the like provided by the watch, and an audio output effect such as a volume or an EQ may be further adjusted during noise reduction control.

For example, when a user scenario is staying indoors and in a low heart rate state, the user may be sleeping, and the headset may adjust an audio style to "soothing", and gradually decrease the volume to help the user sleep.

811: The mobile phone displays the user scenario and audio output effect information.

As a display device, the mobile phone may display the identified user scenario and the corresponding audio output effect information.

812: The mobile phone configures or modifies a correspondence between a user scenario and audio output effect information in response to a setting operation performed by the user on an interface.

In this way, the user may customize the correspondence between a user scenario and audio output effect information on the interface of the mobile phone, to more intelligently meet diversified audio output requirements of the user.

The foregoing is described by using an example in which the user enables the intelligent audio mode on the mobile phone side. In some other embodiments, the user may enable the intelligent audio mode on the headset side. Refer to FIG. 8C. In this case, steps 800 to 804 in FIG. 8B-1 and FIG. 8B-2 may be replaced with steps 800a to 804a.

800a: After detecting a preset operation of the user, the headset enables an intelligent audio mode.

801a: After enabling the intelligent audio mode, the headset negotiates with the mobile phone and the watch to determine the mobile phone as a decision control device, a perception device, and a display device, determine the watch as a perception device, and determine the headset as a perception device and an audio device.

802a: After enabling the intelligent audio mode, the headset indicates the mobile phone to enable an intelligent audio mode.

In some embodiments, after the headset enables the intelligent audio mode, the headset indicates the mobile phone to enable the intelligent audio mode. In some other embodiments, the user can hear a corresponding audio output effect only after the headset is worn. Therefore, the headset may indicate the mobile phone to enable the intelligent audio mode only after the headset enables the intelligent audio mode and determines that the headset is in a worn state.

803a: After receiving notification information of the headset, the mobile phone enables the intelligent audio mode, and indicates the watch to enable an intelligent audio mode.

804a: After receiving notification information of the mobile phone, the watch enables the intelligent audio mode.

Then, the mobile phone, the watch, and the headset continue to perform steps 805 to 812.

It should be noted that the watch in the audio system also has a display function. In some embodiments, the watch may also assist the mobile phone to provide simple information presentation, for example, may present a user scenario identified by the mobile phone.

In addition, according to strength of a computing capability, different types of electronic devices correspond to different decision priorities, and an electronic device with a higher decision priority is preferentially used as a decision control device. For example, a decision priority of the mobile phone is higher than that of the watch, and the mobile phone is preferentially used as a decision control device. In addition, the decision control device may also perform switching in real time according to a current actual situation. For example, the watch also has a comparatively strong computing capability, and may be used as an alternative decision control device. When the mobile phone is in a low battery state or the mobile phone cannot perform calculation processing or cannot communicate with the watch and the headset due to an exception (for example, the mobile phone is powered off or enters an airplane mode), the watch may be used as a decision control device and a display device. When the watch is a decision control device, the user may enable the intelligent audio mode based on a display interface of the watch, and the watch may display a user scenario and an audio output effect. The user may further modify a correspondence based on the display interface of the watch, and the like.

In the solutions described in FIG. 8B-1 and FIG. 8B-2 or FIG. 8C, the mobile phone, the watch, and the headset, as the perception device, may obtain rich user scenario perception information from a plurality of dimensions and a plurality of angles, and obtain corresponding scenario perception results. The mobile phone may accurately identify, based on a multi-dimensional perception capability of a plurality of perception devices and with reference to a multi-dimensional scenario perception result, a user scenario obtained through fine division. The headset may accurately control an audio output effect from a plurality of dimensions and aspects based on the user scenario identified by the mobile phone, so that the audio output effect can better match a user requirement in a current user scenario.

In other words, based on a multi-dimensional and distributed perception technology, the audio system can identify a more refined user scenario, so that identification accuracy and stability are higher, and an identification function is more reliable. In addition, the audio system can adaptively adjust a noise control effect based on a refined scenario, and set or modify an audio output effect based on the refined user scenario.

In addition, in some other embodiments of this application, audio perception function may also be enabled on the headset side only when audio perception of the mobile phone is blocked, to reduce power consumption of the headset and save power of the headset.

It should be noted that the communication connection in the audio system in embodiments of this application is not limited to the Bluetooth connection in the foregoing examples, and the electronic device in the audio system is not limited to the device such as the mobile phone, the watch, or the headset in the foregoing examples. When the communication connection in the audio system is in another connection manner, and the electronic device in the audio system includes another device, the audio control method described in the foregoing embodiment may still be used to adaptively adjust the audio output effect. Details are not described herein again.

It may be understood that, to implement the foregoing functions, each electronic device in the audio system includes corresponding hardware and/or software modules for performing each function. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device in the audio system may be divided into function modules based on the foregoing method examples. For example, each function module may be obtained through division based on each function, or two or more functions may be integrated into one processing module. The integrated module may be implemented in a form of hardware. It should be noted that, in embodiments, division into the modules is an example, is merely logical function division, and may be other division during actual implementation.

An embodiment of this application further provides an electronic device, which may be each role device in an audio system. The electronic device includes one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the audio output method in the foregoing embodiment.

An embodiment of this application further provides a computer-readable storage medium. The computer-readable storage medium stores computer instructions. When the computer instructions are run on an electronic device, the electronic device is enabled to perform the related method steps, to implement the audio output method in the foregoing embodiment. The electronic device may be each role device in the audio system.

An embodiment of this application further provides a computer program product. When the computer program product is run on a computer, the computer is enabled to perform the foregoing related steps, to implement the audio output method performed by the electronic device in the foregoing embodiment. The electronic device may be each role device in the audio system.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the audio output method performed by the electronic device in the foregoing method embodiment. The electronic device may be each role device in the audio system.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

Another embodiment of this application provides an audio system. The audio system may include role devices such as a perception device, a decision control device, an audio device, and a display device, and may be configured to implement the foregoing audio output method. Each role device may be one physical device, or a plurality of role devices may be located on a same physical device.

Based on descriptions of the foregoing implementations, a person skilled in the art may understand that, for the purpose of convenient and brief descriptions, division into the foregoing function modules is merely used as an example for description. In actual application, the foregoing functions can be allocated to different function modules and implemented based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of the embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An audio control method, applied to an audio system, wherein the audio system comprises a plurality of perception devices, a decision control device, and an audio device that are connected for communication, and the method comprises:
obtaining, by the perception device, scenario perception information, and obtaining a scenario perception result based on the scenario perception information;
sending, by the perception device, first information to the decision control device, wherein the first information indicates a scenario perception result;
identifying, by the decision control device after receiving first information from the plurality of perception devices, a user scenario based on scenario perception results indicated by the first information;
sending, by the decision control device, second information to the audio device, wherein the second information indicates the user scenario; and
after receiving the second information from the decision control device, adjusting, by the audio device, an audio output effect based on the user scenario indicated by the second information, wherein the audio output effect comprises one or more of noise control, equalizer EQ adjustment, or volume adjustment.

2. The method according to claim 1, wherein the audio output effect further comprises audio prompt information.

3. The method according to claim 1 or 2, wherein the scenario perception information comprises one or more of image information, sound information, or motion status information.

4. The method according to claim 3, wherein the scenario perception information further comprises one or more of the following: location information, ambient light information, cellular communication information, application information, or heart rate information.

5. The method according to any one of claims 1 to 4, wherein the adjusting, by the audio device, an audio output effect based on the user scenario indicated by the second information comprises:
adjusting, by the audio device, the audio output effect based on the user scenario indicated by the second information and a correspondence between a user scenario and audio output effect information, wherein
the correspondence is preset on the audio device or from the decision control device.

6. The method according to any one of claims 1 to 5, wherein the audio system further comprises a display device, and the method further comprises:
sending, by the decision control device, third information to the display device, wherein the third information indicates the user scenario; and
displaying, by the display device after receiving the third information, the user scenario indicated by the third information and/or the audio output effect information corresponding to the user scenario.

7. The method according to claim 6, wherein the method further comprises:
configuring or modifying, by the display device, the correspondence between a user scenario and audio output effect information in response to a first preset operation of a user for a display interface; and
sending, by the display device, a configured or modified correspondence to the decision control device.

8. The method according to claim 6 or 7, wherein the method further comprises:
setting, by the display device, a correspondence between a user scenario and a perception device in response to a second preset operation of the user for the display interface; and
sending, by the display device, the set correspondence between a user scenario and a perception device to the decision control device.

9. An audio system, comprising a plurality of perception devices, a decision control device, and an audio device, wherein
the perception device is configured to: obtain scenario perception information, obtain a scenario perception result based on the scenario perception information, and send first information to the decision control device, wherein the first information indicates the scenario perception result;
the decision control device is configured to: after receiving first information from the plurality of perception devices, identify a user scenario based on the scenario perception result indicated by the first information, and send second information to the audio device, wherein the second information indicates the user scenario; and
the audio device is configured to: after receiving the second information from the decision control device, adjust an audio output effect based on the user scenario indicated by the second information, wherein the audio output effect comprises one or more of noise control, equalizer EQ adjustment, or volume adjustment.

10. The audio system of claim 9, wherein the audio output effect further comprises audio prompt information.

11. The audio system according to claim 9 or 10, wherein the scenario perception information comprises one or more of image information, sound information, or motion status information.

12. The audio system according to claim 11, wherein the scenario perception information further comprises one or more of the following: location information, ambient light information, cellular communication information, application information, or heart rate information.

13. The audio system according to any one of claims 9 to 12, wherein that the audio device is configured to adjust an audio output effect based on the user scenario indicated by the second information comprises:
adjust the audio output effect based on the user scenario indicated by the second information and a correspondence between a user scenario and audio output effect information, wherein
the correspondence is preset on the audio device or from the decision control device.

14. The audio system according to any one of claims 9 to 13, wherein the audio system further comprises a display device;
the decision control device is further configured to send third information to the display device, wherein the third information indicates the user scenario; and
the display device is configured to: after receiving the third information, display the user scenario indicated by the third information and/or the audio output effect information corresponding to the user scenario.

15. The audio system according to claim 14, wherein the display device is further configured to:
configure or modify the correspondence between a user scenario and audio output effect information in response to a first preset operation of a user for a display interface of the display device; and
send a configured or modified correspondence to the decision control device.

16. The audio system according to claim 14 or 15, wherein the display device is further configured to:
set a correspondence between a user scenario and a perception device in response to a second preset operation of the user for the display interface of the display device; and
send the set correspondence between a user scenario and a perception device to the decision control device.

17. An audio control method, comprising:
receiving, by an audio device, second information, wherein the second information indicates a user scenario; and
adjusting, by the audio device, an audio output effect based on the user scenario indicated by the second information, wherein the audio output effect comprises one or more of noise control, equalizer EQ adjustment, or volume adjustment.

18. The method according to claim 17, wherein the audio output effect further comprises audio prompt information.

19. The method according to claim 17 or 18, wherein the adjusting, by the audio device, an audio output effect based on the user scenario indicated by the second information comprises:
adjusting, by the audio device, the audio output effect based on the user scenario indicated by the second information and a correspondence between a user scenario and audio output effect information, wherein
the correspondence is preset on the audio device or from a decision control device.

20. The method according to any one of claims 17 to 19, wherein the method further comprises:
obtaining, by the audio device, scenario perception information, and obtaining a scenario perception result based on the scenario perception information; and
sending, by the audio device, fourth information, wherein the fourth information indicates the scenario perception result.

21. An audio device, comprising:
one or more processors;
a memory; and
one or more computer programs, wherein the one or more computer programs are stored on the memory, and when the computer programs are executed by the one or more processors, the audio device is enabled to perform the following operations:
receiving second information, wherein the second information indicates a user scenario; and
adjusting an audio output effect based on the user scenario indicated by the second information, wherein the audio output effect comprises one or more of noise control, equalizer EQ adjustment, or volume adjustment.

22. The audio device according to claim 21, wherein the audio output effect further comprises audio prompt information.

23. The audio device according to claim 21 or 22, wherein that the audio device adjusts an audio output effect based on the user scenario indicated by the second information comprises:
adjusting the audio output effect based on the user scenario indicated by the second information and a correspondence between a user scenario and audio output effect information, wherein
the correspondence is preset on the audio device or from a decision control device.

24. The audio device according to any one of claims 21 to 23, wherein when the computer programs are executed by the one or more processors, the audio device is further enabled to perform the following operations:
obtaining scenario perception information, and obtaining a scenario perception result based on the scenario perception information; and
sending fourth information, wherein the fourth information indicates the scenario perception result.
